(19) Europäisches Patentamt
European Patent Office
Office européen des brevets

(11) **EP 4 328 627 B1**

(12) **EUROPEAN PATENT SPECIFICATION**

(45) Date of publication and mention
of the grant of the patent:
**18.02.2026 Bulletin 2026/08**

(21) Application number: **22941881.9**

(22) Date of filing: **01.09.2022**

(51) International Patent Classification (IPC):
**G01T 1/36** $^{(2006.01)}$

(52) Cooperative Patent Classification (CPC):
**G01T 1/362; G01T 1/204;** Y02D 30/70

(86) International application number:
**PCT/CN2022/116502**

(87) International publication number:
**WO 2023/245867 (28.12.2023 Gazette 2023/52)**

(54) **ENERGY SPECTRUM COUNTING WINDOW POSITIONING METHOD AND APPARATUS, AND ELECTRONIC DEVICE AND STORAGE MEDIUM**

VERFAHREN, VORRICHTUNG, ELEKTRONISCHE VORRICHTUNG UND SPEICHERMEDIUM ZUR LOKALISIERUNG DES ZÄHLFENSTERS EINES ENERGIESPEKTRUMS

PROCÉDÉ ET APPAREIL DE POSITIONNEMENT DE FENÊTRE DE COMPTAGE DE SPECTRE D'ÉNERGIE, DISPOSITIF ÉLECTRONIQUE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2022 CN 202210697329**

(43) Date of publication of application:
**28.02.2024 Bulletin 2024/09**

(73) Proprietor: **Shanghai Institute of Measurement and Testing**
**Technology Co., Ltd.**
**Shanghai 210203 (CN)**

(72) Inventors:
• **ZHAO, Chao**
**Shanghai 201203 (CN)**
• **TANG, Fangdong**
**Shanghai 201203 (CN)**
• **HE, Linfeng**
**Shanghai 201203 (CN)**

(74) Representative: **Deambrogi, Edgardo et al**
**Jacobacci & Partners S.p.A.**
**Corso Emilia 8**
**10152 Torino (IT)**

(56) References cited:
CN-A- 107 345 923      CN-A- 110 012 673
CN-A- 110 146 915      CN-A- 112 904 402
CN-A- 113 189 636      US-A- 3 114 835
US-A1- 2008 164 407    US-B1- 9 069 090

• TANAKA ET AL: "Optimum window setting in a spectrometer for low-level activity counting", INTERNATIONAL JOURNAL OF APPLIED RADIATION AND ISOTOPS, PERGAMON PRESS, NEW YORK, NY, US, vol. 16, no. 7, 1 July 1965 (1965-07-01), pages 405 - 412, XP024717570, ISSN: 0020-708X, [retrieved on 19650701], DOI: 10.1016/0020-708X(65)90043-8
• PARK SU-JIN ET AL: "Optimal energy window selection of a CZT-based small-animal SPECT for quantitative accuracy", NUCLEAR INSTRUMENTS & METHODS IN PHYSICS RESEARCH. SECTION A, vol. 782, 14 February 2015 (2015-02-14), pages 104 - 111, XP029203617, ISSN: 0168-9002, DOI: 10.1016/ J.NIMA.2015.02.018

**Description**

TECHNICAL FIELD

The present application relates to the technical field of energy spectrum measurement, in particular to a method for locating a counting window of an energy spectrum, an apparatus, an electronic device and a storage medium for locating a counting window of an energy spectrum.

BACKGROUND

Among the various instruments used for nuclear radiation measurement, $\gamma$ spectrometers, $\alpha$ spectrometers, and liquid scintillation counters are commonly employed for energy spectrum analysis. These instruments provide a means to measure and analyze the radioactive energy spectrum, which is typically represented as a series of data where channels correspond to counts.

For a specific radioactive isotope, the counts contributed by it in the energy spectrum are generally concentrated in corresponding channel field, and only the counts in this field are considered in the energy spectrum analysis, which can avoid the interference of counts outside the field contributed by background and other isotope, the field is called the counting window.

For the energy spectrum measured by a liquid scintillation counter, there is no good method for automatically locating the counting window in the industry. This is mainly because the liquid scintillation counter is generally used to measure the $\beta$ rays whose energy is in a continuous spectrum, and the liquid scintillation counter often has the quenching effect in measuring, resulting in different degrees of deformation and movement of the energy spectrum, moreover, the measured energy spectrum generally does not show a sharp normal distribution, and is even relatively flat, so the existing automatic peak-finding technology is no longer applicable. The method of locating the counting window by traversing the figures of merit (FOM) of all possible counting windows and comparing the magnitudes of the FOMs is too inefficient and less practical.

Further relevant technologies are also known from TANAKA ET AL: "Optimal window setting in a spectrometer for low-level activity counting", INTERNATIONAL JOURNAL OF APPLIED RADIATION AND ISOTOPS, Pergamon Press, vol. 16, no. 7, 1 July 1965, pages 405-412, which relates to a graphical method of determining the optimal window of the differential discriminator which gives the least statistical error in the results in a given measuring time.

SUMMARY

A method for locating a counting window of an energy spectrum, an apparatus, an electronic device and a storage medium for locating a counting window of an energy spectrum are provided according to the present application, to address the issue that the counting window of the energy spectrum is difficult to locate accurately, and to realize automatic locating of the counting window of the energy spectrum and reduce time complexity.

The features of the method for locating a counting window of an energy spectrum, the apparatus for locating an energy spectrum counting window, the electronic device, and the computer-readable storage medium according to the present invention are defined in the independent claims. Further improvements are provided in the dependent claims.

A method for locating a counting window of an energy spectrum is provided, which includes steps as follows. An energy spectrum to be processed is acquired, and the energy spectrum is partitioned into at least two energy spectrum partitions according to channels, at least one candidate energy spectrum segment is determined according to the at least two energy spectrum partitions, where each candidate energy spectrum segment includes at least one energy spectrum partition; a window locating index of each candidate energy spectrum segment is determined, and a marked energy spectrum segment is determined from the at least one candidate energy spectrum segment according to the window locating index of the at least one candidate energy spectrum segment; and a target counting window of the energy spectrum to be processed is determined according to the marked energy spectrum segment.

An apparatus for locating a counting window of an energy spectrum is provided, which includes: an energy spectrum partitioning module; an energy spectrum segment marking module; and a counting window determining module. The energy spectrum partitioning module is configured to acquire an energy spectrum to be processed, and partition the energy spectrum to be processed into at least two energy spectrum partitions according to channels, and determine at least one candidate energy spectrum segment according to the at least two energy spectrum partitions, where each candidate energy spectrum segment includes at least one energy spectrum partition; the energy spectrum segment marking module is configured to determine a window locating index of each candidate energy spectrum segment, and determine a marked energy spectrum segment from the at least one candidate energy spectrum segment according to the window locating index of each candidate energy spectrum segment; and the counting window determining module is configured to determine a target counting window of the energy spectrum to be processed according to the marked energy spectrum segment.

An electronic device is provided, which includes: at least one processor; and a memory communicatively connected to the at least one processor. The memory stores a computer program that can be executed by the at least one processor, and the computer program is executed by the at least one processor, to enable the at least one processor to perform the method for locating a counting window of an energy spectrum according to any embodiment of the present application.

A computer-readable storage medium is provided, which stores a computer instruction, and the computer instruction is used to cause a processor to implement the method for locating a counting window of an energy spectrum according to any embodiment of the present application when the computer instruction is executed by the processor.

BRIEF DESCRIPTION OF DRAWINGS

The drawings that need to be used in the description of the embodiments are briefly introduced hereinafter. Apparently, the drawings in the following description only show some embodiments of the present application. For the person skilled in the art, other drawings can also be obtained based on these drawings without making creative efforts.

FIG. 1 is a schematic flowchart of a method for locating a counting window of an energy spectrum according to a first embodiment of the present application;

FIG. 2 is a schematic flowchart of a method for locating a counting window of an energy spectrum according to a second embodiment of the present application;

FIG. 3 is a schematic flowchart of a method for locating a counting window of an energy spectrum according to a third embodiment of the present application;

FIG. 4 is a schematic diagram of an energy spectrum to be processed according to a fourth embodiment of the present application;

FIG. 5 is a schematic diagram of an energy spectrum showing a partitioning of the first iteration according to the fourth embodiment of the present application;

FIG. 6 is a schematic diagram of an energy spectrum showing a partitioning of the second iteration according to the fourth embodiment of the present application;

FIG. 7 is a schematic diagram of an energy spectrum showing a partitioning of the third iteration according to the fourth embodiment of the present application;

FIG. 8 is a schematic diagram of an energy spectrum showing a partitioning of the fourth iteration according to the fourth embodiment of the present application;

FIG. 9 is a schematic diagram of an energy spectrum showing a partitioning of the fifth iteration according to the fourth embodiment of the present application;

FIG. 10 is a schematic diagram of an energy spectrum showing a partitioning of the sixth iteration according to the fourth embodiment of the present application;

FIG. 11 is a schematic structural diagram of an energy spectrum counting window device according to a seventh embodiment of the present application;

FIG. 12 is a schematic structural diagram of an electronic device according to an eighth embodiment of the present application.

DETAILED DESCRIPTION

The technical solutions in the embodiments of the present application are described hereinafter in conjunction with the drawings in the embodiments of the present application. Apparently, the described embodiments are only a part of embodiments of the present application rather. Based on the embodiments described in the present application, all other embodiments obtained by the person of ordinary skill in the art without making creative efforts shall fall within the protection scope of the present application.

It is to be noted that the terms "first", "second" and the like in the description, claims and drawings of the present application are intended to distinguish between similar objects and are not necessarily used to describe a particular order or sequence. It is to be understood that the data used in this way is interchangeable where appropriate so that the embodiments of the present application described herein may also be implemented in a sequence not illustrated or described herein. Furthermore, terms such as "include", "have"; and any deformation thereof, are intended to cover non-exclusive inclusion, e.g., a process, method, system, product, or device including a series of steps or units is not necessarily limited to those steps or units expressly listed, but may include other steps or units not expressly listed or inherent to such process, method, system, product or device.

First Embodiment

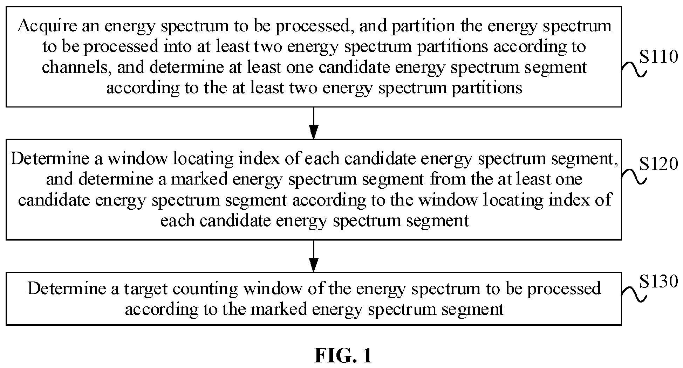

FIG. 1 is a schematic flowchart of a method for locating a counting window of an energy spectrum according to a first embodiment of the present application. This embodiment is applicable to a case of automatically locating a counting window of an energy spectrum. The method can be implemented by means of an apparatus for locating a counting window of an energy spectrum, the apparatus can be realized by means of software and/or hardware, and the apparatus can be configured in an electronic device, such as: a PC terminal, a server, and the like. As shown in FIG. 1, the method includes steps as follows.

In a step S110, an energy spectrum to be processed is acquired, and the energy spectrum is partitioned into at least two energy spectrum partitions according to channels, and at least one candidate energy spectrum segment is determined according to the at least two energy spectrum partitions.

The energy spectrum to be processed may be data measured by radiation measurement instruments. The energy spectrum partitions may be energy spectrum regions obtained by partitioning the energy spectrum to be processed according to a preset rule, specifically, the preset rule may be determined according to practical requirements and is not limited. Each candidate energy spectrum segment includes at least one energy spectrum partition, and in some implementations, each energy spectrum partition is determined as a candidate energy spectrum segment, or at least two adjacent energy spectrum segments are determined as a candidate energy spectrum segment.

It is to be noted that the radioactive energy spectrum measured by the energy spectrum type measuring instrument is generally expressed as a series of data in which channels correspond to counts, as shown in Table 1. The channels generally have a positive correlation with energy, and the linear relationship or logarithmic relationship is more common. A channel i corresponds to a count $N_i$, and its physical meaning is that the radiation measurement instrument records $N_i$ counts under the energy corresponding to the channel.

Table 1

| Channel | 1 | 2 | ... | i | i+1 | ... | n |
|---------|---|---|-----|---|-----|-----|---|
| Count | $N_1$ | $N_2$ | ... | $N_i$ | $N_{i+1}$ | ... | $N_n$ |

The energy spectrum to be processed can be acquired based on the radiation measurement instrument; or the energy spectrum to be processed which is pre-measured and stored is acquired. Based on a preset rule, the energy spectrum to be processed is partitioned according to the channels, and at least two energy spectrum partitions are obtained. At least one candidate energy spectrum segment can be determined according to a combination of the at least two energy spectrum partitions. Optionally, if each candidate energy spectrum segment includes two or more energy spectrum partitions, the two or more energy spectrum partitions are arranged contiguously.

Exemplarily, if the energy spectrum partitions include energy spectrum partitions 1, 2, 3 and 4, then the energy spectrum partitions 1, 2, 3 and 4 may each be used as one candidate energy spectrum segment; or two adjacent energy spectrum partitions, such as the energy spectrum partitions 1 and 2, the energy spectrum partitions 2 and 3, and the energy spectrum partitions 3 and 4, may be used as one candidate energy spectrum segment; or adjacent three energy spectrum partitions, such as the energy spectrum partitions 1 to 3 and the energy spectrum partitions 2 to 4, may be used as one candidate energy spectrum segment; apparently, the energy spectrum partitions 1 to 4 may also be used as one candidate energy spectrum segment.

On the basis of this embodiment, the energy spectrum to be processed can be partitioned into at least two energy spectrum partitions according to the channels through any of the methods as follows.

In a first method, the energy spectrum to be processed is partitioned into at least two energy spectrum partitions according to the total number of channels and a preset number of channels included in an energy spectrum partition.

The number of channels that should be included in an energy spectrum partition can be preset according to practical requirements, and the energy spectrum to be processed is partitioned according to this preset number of channels included in an energy spectrum partition and the total number of channels to obtain at least two energy spectrum partitions. If the total number of channels is not an integer multiple of the preset number of channels included in an energy spectrum partition, the remaining channels can be used as a separate energy spectrum partition, or the remaining channels can also be added to the last energy spectrum partition.

Exemplarily, the total number of channels is 256. If a preset number of channels included in an energy spectrum partition is 64, channels 1-64, 65-128, 129-192 and 193-256 can be used as four energy spectrum partitions. If a preset number of channels included in an energy spectrum partition is 80, channels 1-80, 81-160, 161-240 and 241-256 may be used as four energy spectrum partitions or channels 1-80, 81-160, and 161-256 may be used as three energy spectrum partitions.

In a second method, the energy spectrum to be processed is partitioned into at least two energy spectrum partitions according to the total number of channels and a preset number of partitions corresponding to energy spectrum partitions.

The number of partitions corresponding to the energy spectrum partitions may be preset according to practical requirements, and the energy spectrum to be processed is partitioned according to this number of partitions and the total number of channels to obtain at least two energy spectrum partitions.

Exemplarily, the total number of channels is 256, if the preset number of partitions corresponding to the energy spectrum partitions is 8, then channels 1-32, 33-64, 65-96, 97-128, 129-160, 161-192, 193-224 and 225-256 may be used as eight energy spectrum partitions.

In a third method, the energy spectrum to be processed is partitioned into at least two energy spectrum partitions according to the distribution of energy spectrum data of the energy spectrum to be processed.

The distribution of the energy spectrum data may be the distribution of amplitudes or the like. It may be understood that, the distribution of the energy spectrum data may be determined according to the energy spectrum to be processed, and the energy spectrum to be processed may be partitioned according to this distribution, for example, the channels corresponding to count values reaching a preset threshold may be defined into one energy spectrum region, etc.

It is possible that a partition value corresponding to each channel in the energy spectrum to be processed is calculated based on a preset partition value algorithm; for each channel, a partition value corresponding to the respective channel is calculated and an average value of partition values of a preset number of channels adjacent to the respective channel is calculated, and the energy spectrum to be processed is partitioned into at least two energy spectrum partitions according to the average value of the partition values corresponding to multiple channels.

The preset partition value algorithm is:

$$P_i = \frac{(N_i - B_i \cdot T_s/T_B)^2}{N_i + B_i \cdot T_s{}^2/T_B{}^2}$$

where, P is a partition value of each channel, i is a channel serial number, $N_i$ is a sample measurement spectrum count corresponding to the channel i, $B_i$ is a background measurement spectrum count corresponding to the channel i, $T_S$ is a measurement live time of a sample measurement spectrum, $T_B$ is a measurement live time of a background measurement spectrum.

Calculating the partition value of each channel and the average value of the partition values of the preset number of channels adjacent to the respective channel can smooth the partition value of each channel. It is possible to use the partition values of fifteen channels at two ends of each channel to calculate the average value $\overline{P}$ corresponding to the respective channel:

$$\overline{P}_i = \frac{\sum_{j=i-15}^{i+15} P_j}{n}$$

where, n is the actual total number of channels used for the average value calculation, i is a channel serial number of the channel to which the average value to be calculated corresponds, and j is channel serial numbers of the channels used for the average value calculation. **In** general, n is 31, but when the channel i is close to an edge of the energy spectrum, at least one invalid channel j is required to not be considered.

Optional, partitioning the energy spectrum to be processed into at least two energy spectrum partitions according to an average value corresponding to the partition value of each channel, may be, determining the partition serial number of each channel according to the average value corresponding to the respective channel, and dividing the contiguous channels with consistent partition serial number into one partition.

Exemplarily, the partition serial number M of each channel can be calculated according to the following formula:

$$M_i = \begin{cases} 0 & \forall \overline{P}_i \in [0,1] \\ 1 & \forall \overline{P}_i \in (1,2] \\ 2 & \forall \overline{P}_i \in (2,5] \\ 3 & \forall \overline{P}_i \in (5, +\infty) \end{cases}$$

In S120, a window locating index of each candidate energy spectrum segment is determined, and a marked energy spectrum segment is determined from the at least one candidate energy spectrum segment according to the window locating index of each candidate energy spectrum segment.

The window locating index may be index data determined according to the energy spectrum data of the at least one candidate energy spectrum segment or according to the energy spectrum data of the at least one candidate energy spectrum segment and other data, and the window locating index is used to measure the pros and cons of a counting window. The marked energy spectrum segment can be one candidate energy spectrum segment in the at least one candidate energy spectrum segment or multiple contiguous candidate energy spectrum segments in the at least one candidate energy spectrum segment, and the marked energy spectrum segment is the energy spectrum segment with the optimal counting window obtained through the current partitioning.

According to the calculation method for a window locating index, the window locating index of each candidate energy spectrum segment can be calculated and determined. In an implementation, a candidate energy spectrum segment with the optimal window locating index, referred as an optimal candidate energy spectrum segment in this paragraph, can be determined as a marked energy spectrum segment. In another implementation, the window locating index of the optimal candidate energy spectrum segment, the window locating index of a combination of the optimal candidate energy spectrum segment and an adjacent candidate energy spectrum segment on its left side, the window locating index of the combination of the optimal candidate energy spectrum segment and an adjacent candidate energy spectrum segment on its right side, and the window locating index of the combination of the optimal candidate energy spectrum segment and adjacent candidate energy spectrum segments on its left and right sides are calculated, respectively, the optimal candidate energy spectrum segment or the combination having the optimal window locating index is determined as the marked energy spectrum segment according to their window locating indexes.

It should be noted that, in the embodiment of the present application, whether the window locating index is optimal is related to the calculation method for the window locating index, and its value is not limited here. For example, the optimal window locating index may be the maximum value in the window locating indexes, or it may be the minimum value in the window locating indexes, or it may be the value closest to a set value in the window locating indexes, or it may be the median of the window locating indexes, etc.

Optionally, the window locating index is the figure of merit (FOM) proposed by the academic community in this field, and its definition is generally the ratio of the square of detection efficiency to the background counting rate. When the FOM value is larger, the index effect is better, and the effect of the counting window is better.

Optionally, a window locating index is defined as follows:

$$F(R) = \frac{\sum_{i \in R}(N_i/T_S - B_i/T_B)^2}{\sum_{i \in R} B_i/T_B}$$

where, F(R) is a window locating index of a candidate energy spectrum segment R, i is a channel serial number in the candidate energy spectrum segment R, $N_i$ is a sample measurement spectrum count corresponding to the channel i, and $B_i$ is a background measurement spectrum count corresponding to the channel i, $T_S$ is a measurement live time of a sample measurement spectrum, and $T_B$ is a measurement live time of a background measurement spectrum.

Optionally, a window locating index is defined as follows:

$$F(R) = 100 \frac{\sqrt{\sum_{i \in R}\left(N_i + B_i \cdot T_s^2/T_B^2\right)}}{\sum_{i \in R}(N_i - B_i \cdot T_s/T_B)}$$

where, F(R) is a window locating index of a candidate energy spectrum segment R, i is a channel serial number in the candidate energy spectrum segment R, $N_i$ is a sample measurement spectrum count corresponding to the channel i, and $B_i$ is a background measurement spectrum count corresponding to the channel i, $T_S$ is a measurement live time of a sample measurement spectrum, and $T_B$ is a measurement live time of a background measurement spectrum.

Optionally, a window locating index is defined as follows.

$$F(R) = \log_2 L_R \cdot \log_2 \left[ \frac{\sum_{i \in R} N_i / T_S}{\sum_{i \in R} B_i / T_B} \right]$$

Where, F(R) is a window locating index of a candidate energy spectrum segment R, i is a channel serial number in the candidate energy spectrum segment R, $L_R$ is the width of the candidate energy spectrum segment R (that is, the number of channels the candidate energy spectrum segment R contains), $N_i$ is a sample measurement spectrum count corresponding to the channel i, and $B_i$ is a background measurement spectrum count corresponding to the channel i, $T_S$ is a measurement live time of a sample measurement spectrum, and $T_B$ is a measurement live time of a background measurement spectrum.

The multiple methods for determining a window locating index described above are exemplary illustrations, and are not restrictions on the calculation methods of window locating indexes. Any index that can be used to evaluate the effect of the calculation window can be used as a window locating index, which is not limited in this embodiment.

Exemplarily, there are a total of eight candidate energy spectrum segments, and a window locating index corresponding to a candidate energy spectrum segment 4 is the optimal one among those of the eight candidate energy spectrum segments. In this case, a window locating index of the candidate energy spectrum segment 4, a window locating index of a candidate energy spectrum segment 3-4, a window locating index of a candidate energy spectrum segment 4-5 and a window locating index of a candidate energy spectrum segment 3-5 can be calculated, respectively, and if the window locating index corresponding to the candidate energy spectrum segment 4 is optimal, then the candidate energy spectrum segment 4 is determined as a marked energy spectrum segment; and if the window locating index corresponding to the candidate energy spectrum segment 3-4 is optimal, expansion is performed to determine a window locating index corresponding to a candidate energy spectrum segment 2-4, a window locating index corresponding to a candidate energy spectrum segment 3-5, and a window locating index corresponding to a candidate energy spectrum segment 2-5, and determine the optimal segment and expanded segment in turn to determine the marked energy spectrum segment. If the window locating index of the candidate energy spectrum segment 4-5 or the window locating index of candidate energy spectrum segment 3-5 is optimal, the method for determining a marked energy spectrum segment is similar to the case where the window locating index corresponding to the candidate energy spectrum segment 3-4 is optimal, which is not repeated here.

In S 130, a target counting window of the energy spectrum to be processed is determined according to the marked energy spectrum segment.

After the marked energy spectrum segment is determined, it can be considered that the marked energy spectrum segment is the optimal energy spectrum segment under the current partitioning rule. In this case, the marked energy spectrum segment can be used as a target counting window of the energy spectrum to be processed. It is also possible to continue to partition the marked energy spectrum segment, that is, to partition the marked energy spectrum segment, and calculate window locating indexes of the partitioned energy spectrum segments and compare the window locating indexes of the partitioned energy spectrum segments to determine a target counting window of the energy spectrum to be processed.

According to the technical solution of the embodiment of the present application, an energy spectrum to be processed is acquired, the energy spectrum to be processed is partitioned into at least two energy spectrum partitions according to channels, so as to perform preliminary partitioning of the energy spectrum to be processed, and at least one candidate energy spectrum segment is determined according to the at least two energy spectrum partitions, a window locating index of each candidate energy spectrum segment is determined, and a marked energy spectrum segment is determined from the at least one candidate energy spectrum segment according to the window locating index of the at least one candidate energy spectrum segment, so as to preliminarily screen the counting windows, determine a target counting window of the energy spectrum to be processed according to the marked energy spectrum segment, thereby addressing the issue of low calculation efficiency and poor practicability in determining the counting window, achieving the technical effects of automatic locating of the counting window of the energy spectrum, reduction of the time complexity, and improvement of practicability.

Second Embodiment

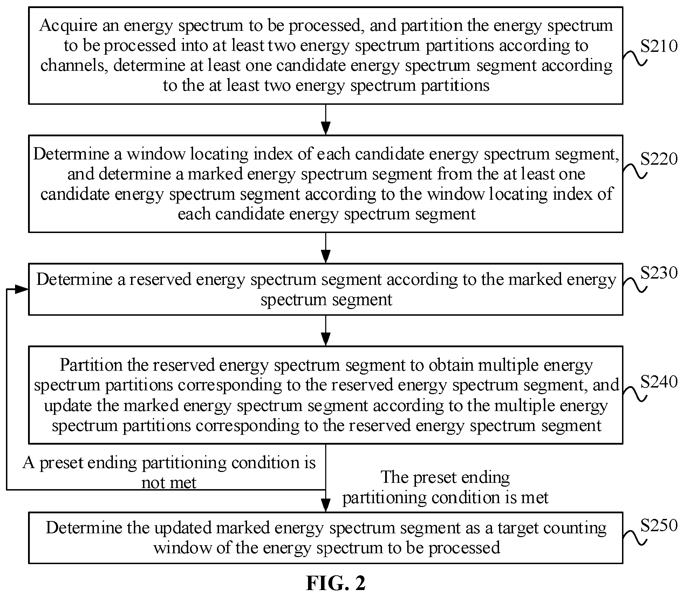

FIG. 2 is a schematic flowchart of a method for locating a counting window of an energy spectrum according to a second embodiment of the present application. This embodiment is based on the embodiment described above, for the specific implementation of determining the target counting window of the energy spectrum to be processed according to the marked energy spectrum segment, reference may be made to the technical solution of this embodiment. Explanations of terms that are the same as or corresponding to those in the above embodiments are not repeated here. As shown in FIG. 2, the method includes steps as follows.

In a step S210, an energy spectrum to be processed is acquired, and the energy spectrum is partitioned into at least two energy spectrum partitions according to channels, at least one candidate energy spectrum segment is determined according to the at least two energy spectrum partitions.

In a step S220, a window locating index of each candidate energy spectrum segment is determined, and a marked energy spectrum segment is determined from the at least one candidate energy spectrum segment according to the window locating index of each candidate energy spectrum segment.

On the basis of this embodiment, the window locating index of each candidate energy spectrum segment can be determined through any methods as follows.

In a first method, a window locating index of each candidate energy spectrum segment is determined according to energy spectrum data of the respective candidate energy spectrum segment or a window locating index of each candidate energy spectrum segment is determined according to energy spectrum data of the respective candidate energy spectrum segment and energy spectrum data of at least one candidate energy spectrum segment in all candidate energy spectrum segments.

For each candidate energy spectrum segment, the window locating index of the respective candidate energy spectrum segment can be calculated and determined according to the energy spectrum data of the respective candidate energy spectrum segment, or the window locating index of the respective candidate energy spectrum segment can be calculated and determined according to the energy spectrum data of the respective candidate energy spectrum segment and energy spectrum data of a candidate energy spectrum segment adj acent to the respective candidate energy spectrum segment.

Optionally, the energy spectrum data includes at least one of a sample count, a background count, measurement time, a channel or energy.

In a second method, a window locating index of each candidate energy spectrum segment is determined according to energy spectrum data of the respective candidate energy spectrum segment and energy spectrum data of the energy spectrum to be processed or a window locating index of each candidate energy spectrum segment is determined according to energy spectrum data of the respective candidate energy spectrum segment and energy spectrum data of at least one candidate energy spectrum segment in all candidate energy spectrum segments and energy spectrum data of the energy spectrum to be processed.

For each candidate energy spectrum segment, the window locating index of the respective candidate energy spectrum segment can be calculated and determined according to the energy spectrum data of the respective candidate energy spectrum segment and energy spectrum data of the energy spectrum to be processed, or the window locating index of the respective candidate energy spectrum segment can be calculated and determined according to the energy spectrum data of the respective candidate energy spectrum segment, the energy spectrum data of at least one candidate energy spectrum segment adj acent to the respective candidate energy spectrum segment and energy spectrum data of the energy spectrum to be processed.

In a third method, a window locating index of each candidate energy spectrum segment is determined according to energy spectrum data of the respective candidate energy spectrum segment and measurement sample data corresponding to the energy spectrum to be processed or a window locating index of each candidate energy spectrum segment is determined according to energy spectrum data of the respective candidate energy spectrum segment, energy spectrum data of at least one candidate energy spectrum segment in all candidate energy spectrum segments and measurement sample data corresponding to the energy spectrum to be processed.

The measurement sample data is data related to the sample to be measured, and is used to measure the measurement sample. Optionally, the measurement sample data includes at least one of measurement sample activity, measurement sample volume and measurement sample mass.

For each candidate energy spectrum segment, the window locating index of the respective candidate energy spectrum segment can be calculated and determined according to the energy spectrum data of the respective candidate energy spectrum segment and measurement sample data corresponding to the energy spectrum to be processed, or the window locating index of the respective candidate energy spectrum segment can be calculated and determined according to the energy spectrum data of the respective candidate energy spectrum segment, the energy spectrum data of at least one candidate energy spectrum segment adj acent to the respective candidate energy spectrum segment and measurement sample data corresponding to the energy spectrum to be processed.

In a fourth method, a window locating index of each candidate energy spectrum segment is determined according to energy spectrum data of the respective candidate energy spectrum segment and measurement environment data corresponding to the energy spectrum to be processed or a window locating index of each candidate energy spectrum segment is determined according to energy spectrum data of the respective candidate energy spectrum segment, energy spectrum data of at least one candidate energy spectrum segment in all candidate energy spectrum segments and measurement environment data corresponding to the energy spectrum to be processed.

The measurement environment data can be used to measure the environment conditions in energy spectrum measurement.

Optionally, the measurement environmental data includes at least one of temperature, humidity, particle count, dust, and electromagnetic measurement in the measurement environment.

For each candidate energy spectrum segment, the window locating index of the respective candidate energy spectrum segment can be calculated and determined according to the energy spectrum data of the respective candidate energy spectrum segment and measurement environment data corresponding to the energy spectrum to be processed, or the window locating index of the respective candidate energy spectrum segment can be calculated and determined according to the energy spectrum data of the respective candidate energy spectrum segment, the energy spectrum data of at least one candidate energy spectrum segment adjacent to the respective candidate energy spectrum segment and measurement environment data corresponding to the energy spectrum to be processed.

In a fifth method, a window locating index of each candidate energy spectrum segment is determined according to energy spectrum data of the respective candidate energy spectrum segment, measurement sample data corresponding to the energy spectrum to be processed and measurement environment data corresponding to the energy spectrum to be processed or a window locating index of each candidate energy spectrum segment is determined according to energy spectrum data of the respective candidate energy spectrum segment, energy spectrum data of at least one candidate energy spectrum segment in all candidate energy spectrum segments, measurement sample data corresponding to the energy spectrum to be processed and measurement environment data corresponding to the energy spectrum to be processed.

For each candidate energy spectrum segment, the window locating index of the respective candidate energy spectrum segment can be calculated and determined according to the energy spectrum data of the respective candidate energy spectrum segment, measurement sample data corresponding to the energy spectrum to be processed and measurement environment data corresponding to the energy spectrum to be processed or the window locating index of the respective candidate energy spectrum segment can be calculated and determined according to the energy spectrum data of the respective candidate energy spectrum segment, the energy spectrum data of at least one candidate energy spectrum segment adjacent to the respective candidate energy spectrum segment, measurement sample data corresponding to the energy spectrum to be processed and measurement environment data corresponding to the energy spectrum to be processed.

In a step S230, a reserved energy spectrum segment is determined according to the marked energy spectrum segment.

The reserved energy spectrum segment can be understood as the energy spectrum segment used in the next partitioning and calculation.

After a marked energy spectrum segment is determined, the marked energy spectrum segment may be determined as a reserved energy spectrum segment, or the marked energy spectrum segment and a certain number of energy spectrum partitions adjacent to the left and right ends of the marked energy spectrum segment may be determined as the reserved energy spectrum segment, or the marked energy spectrum segment and a certain number of channels adjacent to the left and right ends of the marked energy spectrum segment may be determined as the reserved energy spectrum segment.

Optionally, any one of the methods as follows can be used to determine a reserved energy spectrum segment according to the marked energy spectrum segment.

In a first method, the marked energy spectrum segment is determined as a reserved energy spectrum segment.

Exemplarily, the marked energy spectrum segment is energy spectrum partitions 3 and 4, then the reserved energy spectrum segment is also the energy spectrum partitions 3 and 4.

In a second method, a first preset number of energy spectrum partitions adjacent to at least one of two ends of the marked energy spectrum segment are merged into the marked energy spectrum segment to obtain a reserved energy spectrum segment.

Exemplarily, the first preset number is one, and the marked energy spectrum segment is the energy spectrum partitions 3 and 4, then, the first preset number of energy spectrum partitions adjacent to the two ends of the marked energy spectrum segment are an energy spectrum partition 2 and an energy spectrum partition 5. In this case, the reserved energy spectrum segment is the energy spectrum partitions 2-5.

It is be noted that after the first preset number is set, at least one energy spectrum partition adjacent to the left end or at least one energy spectrum partition adjacent to the right end of the marked energy spectrum segment can be merged into the marked energy spectrum segment to obtain the reserved energy spectrum segment; or at least one energy spectrum partition adjacent to the left end and at least one energy spectrum partition adjacent to the right end of the marked energy spectrum segment can also be merged into the marked energy spectrum segment to obtain the reserved energy spectrum segment, where, the number of energy spectrum partitions merged adjacent to the left end of the marked energy spectrum segment and the number of energy spectrum partitions merged adjacent to the right end of the marked energy spectrum segment can be the same, or can be different.

In a third method, a second preset number of channels adjacent to at least one of the two ends of the marked energy spectrum segment are merged into the marked energy spectrum segment to obtain a reserved energy spectrum segment.

Exemplarily, the second preset number is ten, and the marked energy spectrum segment is the energy spectrum partitions 3 and 4, then, ten channels adjacent to the left end of the energy spectrum partition 3, the energy spectrum partitions 3 and 4 and ten channels adjacent to the right end of the energy spectrum partition 4 are determined as a reserved energy spectrum segment.

It is be noted that after the second preset number is set, at least one channel adjacent to the left end or at least one channel adjacent to the right end of the marked energy spectrum segment can be merged into the marked energy spectrum segment to obtain the reserved energy spectrum segment; or at least one channel adjacent to the left end and at least one channel adjacent to the right end of the marked energy spectrum segment can also be merged into the marked energy spectrum segment to obtain the reserved energy spectrum segment, where, the number of channels merged adjacent to the left end of the marked energy spectrum segment and the number of channels merged adjacent to the right end of the marked energy spectrum segment can be the same, or can be different.

It is also to be noted that the first preset number and the second preset number can be set according to practical usage requirements, and the magnitudes are not limited in this embodiment.

In a step S240, the reserved energy spectrum segment is partitioned to obtain multiple energy spectrum partitions corresponding to the reserved energy spectrum segment, and the marked energy spectrum segment is updated according to the multiple energy spectrum partitions corresponding to the reserved energy spectrum segment.

The reserved energy spectrum segment is partitioned, and the multiple energy spectrum partitions obtained after the reserved energy spectrum segment is partitioned are analyzed or are combined and analyzed. A new marked energy spectrum segment can be determined according to the analysis results of the multiple energy spectrum partitions, for updating.

Optionally, the reserved energy spectrum segment can be partitioned by any of the methods as follows to obtain multiple energy spectrum partitions corresponding to the reserved energy spectrum segment.

In a first method, the reserved energy spectrum segment is partitioned into at least two energy spectrum partitions according to the total number of channels and a preset number of channels included in an energy spectrum partition.

The number of channels that should be included in an energy spectrum partition can be preset according to practical requirements, and the reserved energy spectrum segment is partitioned according to this preset number of channels included in an energy spectrum partition and the total number of channels to obtain at least two energy spectrum partitions. If the total number of channels is not an integer multiple of the preset number of channels included in an energy spectrum partition, the remaining channels can be used as a separate energy spectrum partition, or the remaining channels can also be added to the last energy spectrum partition.

In a second method, the reserved energy spectrum segment is partitioned into at least two energy spectrum partitions according to the total number of channels and a preset number of partitions corresponding to energy spectrum partitions.

The number of partitions corresponding to the energy spectrum partitions may be preset according to practical requirements, and the reserved energy spectrum segment is partitioned according to this preset number of partitions and the total number of channels to obtain at least two energy spectrum partitions.

In a third method, the reserved energy spectrum segment is partitioned into at least two energy spectrum partitions according to the distribution of energy spectrum data of the reserved energy spectrum segment.

The distribution of the energy spectrum data may be determined according to the reserved energy spectrum segment, and the reserved energy spectrum segment can be partitioned according to this distribution, for example, the channels corresponding to count values reaching a preset threshold may be defined into one energy spectrum region, etc.

In a fourth method, the reserved energy spectrum segment is partitioned into at least two energy spectrum partitions based on a preset random algorithm.

Based on a preset random algorithm, the reserved energy spectrum segment can be partitioned into a random number of energy spectrum partitions, and the number of channels in each energy spectrum partition is also random.

In a fifth method, an energy spectrum segment to be repartitioned is determined according to the number of energy spectrum partitions in the reserved energy spectrum segment and arrangement information of at least one channel segment corresponding to at least one energy spectrum partition, the energy spectrum segment to be repartitioned is partitioned, and multiple energy spectrum partitions corresponding to the reserved energy spectrum segment are obtained according to the repartitioned result of the energy spectrum segment to be repartitioned.

The energy spectrum segment to be repartitioned may be a segment that is subsequently re-partitioned in the reserved energy spectrum segment, so the energy spectrum segment to be repartitioned may be the whole or part of the reserved energy spectrum segment. The arrangement information may include a positional relationship of the at least one channel segment in the at least one energy spectrum partition, and an energy spectrum partition to which the at least one channel segment belongs.

After the reserved energy spectrum segment is determined, the number of energy spectrum partitions contained in the reserved energy spectrum segment and the arrangement information of the at least one channel segment in each energy spectrum partition can be determined. If there are many energy spectrum partitions in the reserved energy spectrum segment, it can be considered that the middle region of the reserved energy spectrum segment is a region not to be repartitioned and is not partitioned for the time being. In this case, energy spectrum segments to be repartitioned except for the middle region can be determined according to the arrangement information of the at least one channel segment; if the number of energy spectrum partitions in the reserved energy spectrum segment is small, it can be considered that the whole reserved energy spectrum segment is an energy spectrum segment to be repartitioned. Furthermore, the energy spectrum segment to be repartitioned is partitioned to obtain multiple energy spectrum partitions corresponding to the reserved energy spectrum segment.

Optionally, the energy spectrum segment to be repartitioned can be determined through the methods as follows.

If the total number of energy spectrum partitions contained in the reserved energy spectrum segment does not reach a first preset number threshold, the reserved energy spectrum segment is used as an energy spectrum segment to be repartitioned.

If the total number of energy spectrum partitions contained in the reserved energy spectrum segment does not reach the first preset number threshold, it means that there are a small number of energy spectrum partitions in the current reserved energy spectrum segment, and the whole reserved energy spectrum segment may just be used as an energy spectrum segment to be repartitioned.

Exemplarily, the first preset number threshold is five, and if the reserved energy spectrum segment contains energy spectrum partitions 4-7, and the total number of the energy spectrum partitions is four, which is less than the first preset number threshold five, the reserved energy spectrum segment is then used as an energy spectrum segment to be repartitioned, that is, the energy spectrum partitions 4-7 are used as an energy spectrum segment to be repartitioned.

If the total number of energy spectrum partitions contained in the reserved energy spectrum segment reaches a second preset number threshold, an energy spectrum segment composed of a sixth preset number of energy spectrum partitions located at at least one of two ends of the reserved energy spectrum segment is used as an energy spectrum segment to be repartitioned.

If the total number of energy spectrum partitions contained in the reserved energy spectrum segment reaches the second preset number threshold, it means that there are more energy spectrum partitions in the current reserved energy spectrum segment, in this case, if the reserved energy spectrum segment is directly used as an energy spectrum segment to be repartitioned, the number of energy spectrum partitions contained in each energy spectrum segment obtained after the repartitioning is large, and the amount of calculation is relatively large. Therefore, an energy spectrum segment composed of a sixth preset number of energy spectrum partitions located at at least one of the two ends of the reserved energy spectrum segment is used as an energy spectrum segment to be repartitioned, to facilitate the subsequent repartitioning, and the remaining parts are reserved or merged into one partition which will not be repartitioned subsequently.

It is to be noted that after a sixth preset number is set, an energy spectrum segment composed of at least one energy spectrum partition located at the left end or right end of the reserved energy spectrum region can be used as an energy spectrum segment to be repartitioned; or an energy spectrum segment composed of at least one energy spectrum partition located at each of the left end and right end of the reserved energy spectrum region can be used as an energy spectrum segment to be repartitioned, where the number of energy spectrum partitions determined from the left end of the reserved energy spectrum region can be the same as or different from the number of energy spectrum partitions determined from the right end of the reserved energy spectrum region.

Exemplarily, the energy spectrum partitions in the reserved energy spectrum segment are energy spectrum partitions 4-10, the second preset number threshold is five, the sixth preset number corresponding to the left end of the reserved energy spectrum segment is two and the sixth preset number corresponding to the right end of the reserved energy spectrum segment is three. In this case, the total number of the energy spectrum partitions seven reaches the second preset number threshold five, therefore, two energy spectrum partitions at the left end of the reserved energy spectrum segment and three energy spectrum partitions at the right end of the reserved energy spectrum segment, that is, the energy spectrum partitions 4-5 and the energy spectrum partitions 8-10 are used as an energy spectrum segment to be repartitioned.

It is to be noted that the first preset number threshold may be less than or equal to the second preset number threshold. If the first preset number threshold is less than the second preset number threshold, then if the total number of the energy spectrum partitions contained in the reserved energy spectrum segment reaches the first preset number threshold but does not reach the second preset number threshold, any method may be used to determine the energy spectrum segment to be repartitioned, which is not limited in this embodiment.

Optionally, the marked energy spectrum segment can be updated according to multiple energy spectrum partitions corresponding to the reserved energy spectrum segment through multiple steps as follows.

In a first step, combinations of the multiple energy spectrum partitions in the reserved energy spectrum segment are traversed to obtain at least one combined energy spectrum segment.

The combined energy spectrum segment is obtained by combining two or more contiguously arranged energy spectrum partitions.

Any two or more energy spectrum partitions in the reserved energy spectrum segment can be combined together, and multiple combinations with contiguous energy spectrum partitions in the reserved energy spectrum segment are selected as combined energy spectrum segments.

Exemplarily, the reserved energy spectrum segment contains energy spectrum partitions 1-4, thus the combined energy spectrum segments include the energy spectrum partitions 1-2, 1-3, 1-4, 2-3, 2-4 and 3-4.

In a second step, the marked energy spectrum segment is updated according to window locating indexes of the multiple energy spectrum partitions and window locating indexes of the multiple combined energy spectrum segments.

For each energy spectrum partition and each combined energy spectrum segment, the window locating index can be calculated separately, and multiple window locating indexes are compared, and the energy spectrum partition or the combined energy spectrum segment corresponding to the optimal window locating index is determined, according to the comparison result, as a new marked energy spectrum segment.

Exemplarily, partitioning the energy spectrum segment to be repartitioned may be partitioning all the energy spectrum partitions, whose partition width (the number of channels) is not 1, in the energy spectrum segment to be repartitioned into two energy spectrum partitions equally, or two energy spectrum partitions whose numbers of channels differ by 1.

In a step S250, if a preset ending partitioning condition is met, an updated marked energy spectrum segment is determined as a target counting window of the energy spectrum to be processed, and if the preset ending partitioning condition is not met, it returns to perform the step S230.

The preset ending partitioning condition may be a preset condition for determining whether to stop further partitioning. The target counting window may be a finally determined channel region where the counts contributed by the radioisotopes to be measured in the energy spectrum are concentrated.

If the preset ending partitioning condition is met, it means that the iterative partitioning and calculation can be stopped in this case, and the marked energy spectrum segment in the current reserved energy spectrum segment is used as a target counting window of the energy spectrum to be processed.

Optionally, the preset ending partitioning condition can be any type as follows.

In a first type, the number of at least one channel included in the at least one energy spectrum partition in the reserved energy spectrum segment except for the marked energy spectrum segment reaches a first preset channel number threshold.

The first preset channel number threshold may be a channel number used to determine whether the at least one energy spectrum partition other than the marked energy spectrum segment in the reserved energy spectrum segment can be further partitioned, and the first preset channel number threshold is generally one, or can be set according to practical requirements.

Exemplarily, the first preset channel threshold number is two, and if the number of the at least one channel contained in the at least one energy spectrum partition in the reserved energy spectrum segment except for the marked energy spectrum segment is 1 or 2, thus it means that the preset ending partitioning condition has been met.

In a second type, the number of update times of the marked energy spectrum segment reaches a preset number of times threshold.

The preset number of times threshold may be a number used to determine whether the number of update iteration times of the marked energy spectrum segment meets the requirements, and the numerical value of the preset number of times threshold may be set according to practical requirements.

Exemplarily, the preset number of update times is eight, and if the current update of the marked energy spectrum segment is the eighth time, it means that the preset ending partitioning condition has been met.

In a third type, if the marked energy spectrum segment is updated consecutively for a preset number of times, the change of the window locating index of the marked energy spectrum segment after each update does not exceed a preset change amount.

The preset number of consecutive update times may be a preset number of update times, which is used to implement the third condition of the preset ending partitioning condition. A preset change ratio may be a ratio for determining whether the change of the window locating index is sufficiently large. It is to be noted that the change of the window locating index may be a relative change amount between the window locating indexes in the two updates, or an absolute change amount between the window locating indexes in the two updates.

Exemplarily, the preset number of consecutive update times is three, the preset change ratio is 1%, and if the current update is the third time, and the change ratio of the window locating index between the third time update and the second time update is 5%, in this case, the preset ending partitioning condition is not met, and it proceeds to the next update. If each of change ratios of the window locating indexes between the fourth time update and the third time update, between the fifth time update and the fourth time update and between the sixth time update and the fifth time update is less than 1%, the preset ending partitioning condition is met.

In a fourth type, the window locating index of the marked energy spectrum segment is optimal than a preset window locating index threshold.

The preset window locating index threshold may be a numerical value for determining whether the window locating index meets a requirement.

Exemplarily, the preset window locating index threshold is a, and the window locating index with a large value is better. In the current iteration, the window locating index of the marked energy spectrum segment is b. If b>a, the preset ending partitioning condition is met. If b≤a, the preset ending partitioning condition is not met.

If the preset ending partitioning condition is not met, it is required to repartition the reserved energy spectrum segment. In this case, it returns to perform the operation of determining the reserved energy spectrum segment according to the marked energy spectrum segment, for re-determining the target counting window after the subsequent partitioning.

According to the technical solution of the embodiment of the present application, an energy spectrum to be processed is acquired, the energy spectrum to be processed is partitioned into at least two energy spectrum partitions according to channels, so as to perform preliminary partitioning of the energy spectrum to be processed, and at least one candidate energy spectrum segment is determined according to the at least two energy spectrum partitions, a window locating index of each candidate energy spectrum segment is determined, and a marked energy spectrum segment is determined from the at least one candidate energy spectrum segment according to the window locating index of the at least one candidate energy spectrum segment, so as to preliminarily screen counting windows, determine a reserved energy spectrum segment according to the marked energy spectrum segment, and partition the reserved energy spectrum segment to obtain multiple energy spectrum partitions corresponding to the reserved energy spectrum segment, and update the marked energy spectrum segment according to multiple energy spectrum partitions corresponding to the reserved energy spectrum segment. If a preset ending partitioning condition is met, the marked energy spectrum segment is used as a target counting window of the energy spectrum to be processed, and if the preset ending partitioning condition is not met, it returns to perform the operation of determining the reserved energy spectrum segment according to the marked energy spectrum segment, thereby addressing the issue of low calculation efficiency and poor practicability in determining the counting window, achieving the technical effects of automatic locating of the counting window of the energy spectrum, reduction of the time complexity, and improvement of practicability.

Third Embodiment

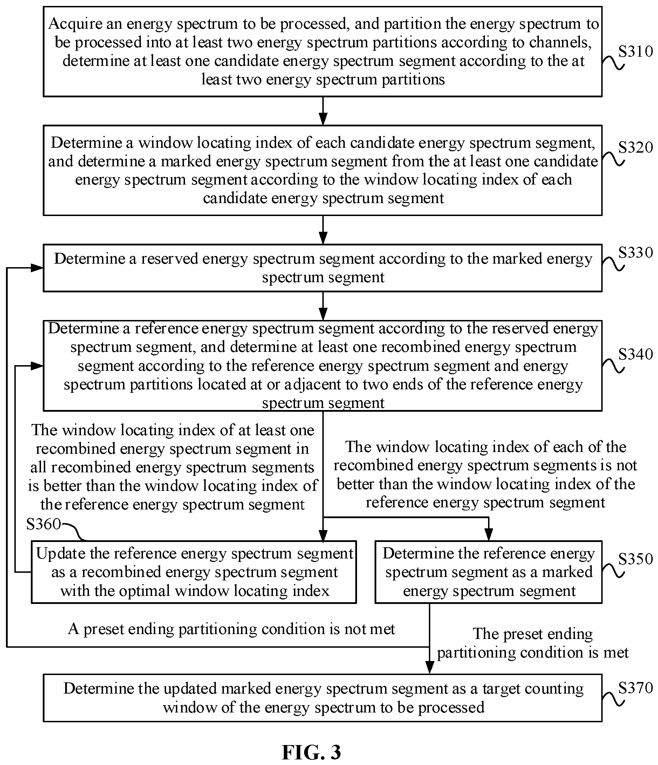

FIG. 3 is a schematic flowchart of a method for locating an energy spectrum counting window according to a third embodiment of the present application. This embodiment is based on the embodiments described above, and for the specific implementation of updating to the marked energy spectrum segment, reference may be made to the technical solution of this embodiment. Explanations of terms that are the same as or corresponding to those in the above embodiments are not repeated here. As shown in FIG. 3, the method includes steps as follows.

In a step S310, an energy spectrum to be processed is acquired, and the energy spectrum is partitioned into at least two energy spectrum partitions according to channels, at least one candidate energy spectrum segment is determined according to the at least two energy spectrum partitions.

In a step S320, a window locating index of each candidate energy spectrum segment is determined, and a marked energy spectrum segment is determined from the at least one candidate energy spectrum segment according to the window locating index of each candidate energy spectrum segment.

In a step S330, a reserved energy spectrum segment is determined according to the marked energy spectrum segment.

In a step S340, a reference energy spectrum segment is determined according to the reserved energy spectrum segment, and at least one recombined energy spectrum segment is determined according to the reference energy spectrum segment and at least one energy spectrum partition located at two ends of the reference energy spectrum segment.

If the window locating index of at least one recombined energy spectrum segment in all recombined energy spectrum segments is better than the window locating index of the reference energy spectrum segment, S360 is performed. After S360 is performed, it continues to perform the step S340; and if the window locating index of each of the recombined energy spectrum segments is not better than the window locating index of the reference energy spectrum segment, a step S350 is performed.

The reference energy spectrum segment may be an energy spectrum segment serving as a reference for subsequent analysis. The recombined energy spectrum segment may be an energy spectrum segment obtained by differently combining the reference energy spectrum segment and the at least one energy spectrum partition located at the two ends of the reference energy spectrum segment.

In one implementation, at least one energy spectrum partition, whose window locating index meets a preset reference condition, among multiple energy spectrum partitions of the reserved energy spectrum segment can be determined as a reference energy spectrum segment. In another implementation, a number of energy spectrum partitions in the marked energy spectrum segment is greater than a preset partition number threshold may also be determined, and if the number of the energy spectrum partitions in the marked energy spectrum segment is greater than the preset partition number threshold, a certain number of energy spectrum partitions located at two ends of the reserved energy spectrum segment are removed, and the remaining part is determined as the reference energy spectrum segment. In another implementation, the whole reserved energy spectrum segment may also be determined as the reference energy spectrum segment. In one implementation, the reference energy spectrum segment and the energy spectrum partitions adjacent to the two ends of the reference energy spectrum segment (at least one energy spectrum partition adjacent to the left end, at least one energy spectrum partition adjacent to the right end, and at least one energy spectrum partition adjacent to the left and right ends) may be combined respectively to obtain at least one recombined energy spectrum segment. In another implementation, the energy spectrum partitions located at the two ends of the reference energy spectrum segment (at least one energy spectrum partition located at the left end, at least one energy spectrum partition located at the right end, and at least one energy spectrum partition located at the left and right ends), in the reference energy spectrum segment may also be removed respectively to obtain at least one recombined energy spectrum segment.

Optionally, the reference energy spectrum segment and at least one recombined energy spectrum segment can be determined through multiple steps as follows.

In a first step, window locating indexes of multiple energy spectrum partitions of the reserved energy spectrum segment are determined, and the energy spectrum partitions whose window locating indexes meet a preset reference condition are used as a reference energy spectrum segment, or, if the number of energy spectrum partitions in the marked energy spectrum segment is greater than a preset partition number threshold, a third preset number of energy spectrum partitions located at at least one end of the two ends of the reserved energy spectrum segment are removed from the reserved energy spectrum segment to obtain a reference energy spectrum segment.

The preset reference condition may be a preset condition corresponding to the window locating index, for example: the window locating index is the largest, or the window locating index reaches a preset threshold, and the like. The preset partition number threshold may be a preset value for determining whether the number of partitions in the marked energy spectrum segment meets the requirement for removing at least one energy spectrum partition from the reserved energy spectrum segment.

In one implementation, by calculating window locating indexes of multiple energy spectrum partitions of the reserved energy spectrum segment and determining whether the window locating indexes of the multiple energy spectrum partitions meet the preset reference condition, energy spectrum partitions with window locating indexes meeting a preset reference condition are determined as a reference energy spectrum segment. **In** another implementation, a third preset number of energy spectrum partitions located at at least one end of the two ends of the reserved energy spectrum segment are removed from the reserved energy spectrum segment in case that the number of energy spectrum partitions of the marked energy spectrum segment is greater than a preset partition number threshold, and the remaining part is used as a reference energy spectrum partition.

It is to be noted that, after the third preset number is set, the third preset number of energy spectrum partitions located at the left end or right end of the reserved energy spectrum segment can be removed from the reserved energy spectrum segment to obtain a reference energy spectrum segment; or the third preset number of energy spectrum partitions located at the left end and right end of the reserved energy spectrum segment can be removed from the reserved energy spectrum segment to obtain a reference energy spectrum segment, and the number of energy spectrum partitions removed at the left end and the number of energy spectrum partitions removed at the right end can be the same, or can be different.

In a second step, an energy spectrum segment to be combined is determined according to a fourth preset number of energy spectrum partitions adjacent to at least one of the two ends of the reference energy spectrum segment, and the reference energy spectrum segment and the energy spectrum segment to be combined are merged, to obtain at least one recombined energy spectrum segment.

The energy spectrum segment to be combined may be a fourth preset number of energy spectrum partitions adjacent to the reference energy spectrum segment.

A fourth preset number of energy spectrum partitions located outside the reference energy spectrum segment and adjacent to at least one of the two ends of the reference energy spectrum segment in the reference energy spectrum segment are used as an energy spectrum segment to be combined. The reference energy spectrum segment is combined with at least one energy spectrum segment to be combined to obtain at least one recombined energy spectrum segment.

It is to be noted that after the fourth preset number is set, the energy spectrum segment to be combined may be determined according to the at least one energy spectrum partition adjacent to the left end or the at least one energy spectrum partition adjacent to the right end of the reference energy spectrum segment; or the energy spectrum segment to be combined may be determined according to the energy spectrum partitions adjacent to the left end and right end of the reference energy spectrum segment, where the number of energy spectrum partitions determined adjacent to the left end and the number of energy spectrum partitions determined adjacent to the right end may be the same or different.

Optionally, the reference energy spectrum segment and at least one recombined energy spectrum segment can further be determined through methods as follows.

The reserved energy spectrum segment is used as a reference energy spectrum segment, an energy spectrum segment to be removed is determined according to a fifth preset number of energy spectrum partitions located at at least one of the two ends of the reference energy spectrum segment, and the energy spectrum segment to be removed in the reference energy spectrum segment is removed to obtain at least one recombined energy spectrum segment.

The energy spectrum segment to be removed may be the fifth preset number of energy spectrum partitions located at at least one end of the two ends of the reference energy spectrum segment.

The reserved energy spectrum segment is used as a reference energy spectrum segment, the fifth preset number of energy spectrum partitions located at at least one end of the two ends of the reference energy spectrum segment are used as the energy spectrum segment to be removed, and at least one energy spectrum segment to be removed is removed from the reference energy spectrum segment, thus, at least one recombined energy spectrum segment can be obtained.

It is to be noted that after the fifth preset number is set, the energy spectrum segment to be removed may be determined according to at least one energy spectrum partition located at the left end or at least one energy spectrum partition located at the right end of the reference energy spectrum segment; and the energy spectrum segment to be removed may be determined according to the energy spectrum partitions located at the left end and right end in the reference energy spectrum segment, where the number of energy spectrum partitions determined at the left end and the number of energy spectrum partitions determined at the right end may be the same or different.

If the window locating index of the recombined energy spectrum segment is better than that of the reference energy spectrum segment, it means that the window effect of the recombined energy spectrum segment is better than that of the reference energy spectrum segment. Therefore, the reference energy spectrum segment is updated as a recombined energy spectrum segment with the optimal window locating index, and it returns to perform the operation of determining at least one recombined energy spectrum segment according to the reference energy spectrum segment and the at least one energy spectrum partition located at the two ends of the reference energy spectrum segment to determine whether the current reference energy spectrum segment is optimal; if the window locating index of each of the recombined energy spectrum segments is not better than the window locating index of the reference energy spectrum segment, it means that the window effect of the reference energy spectrum segment is better than that of the at least one recombined energy spectrum segment, and there is no need to update the reference energy spectrum segment. In this case, the reference energy spectrum segment can be used as a marked energy spectrum segment.

In the step S350, the reference energy spectrum segment is determined as a marked energy spectrum segment.

In a step S360, the reference energy spectrum segment is updated as a recombined energy spectrum segment with the optimal window locating index.

In a step S370, if the preset ending partitioning condition is met, the updated marked energy spectrum segment is determined as a target counting window of the energy spectrum to be processed; if the preset ending partitioning condition is not met, it returns to perform the step S330.

Optionally, the target counting window can be determined through methods as follows.

If the difference between the channel number of the energy spectrum partitions in the recombined energy spectrum segment and the channel number of the energy spectrum partitions in the reference energy spectrum segment does not exceed a preset difference threshold, the updated marked energy spectrum segment is used as a target counting window for the energy spectrum to be processed.

The preset difference threshold can be used to compare the size of the energy spectrum partitions in the recombined energy spectrum segment and the size of the energy spectrum partitions in the reference energy spectrum segment to determine whether it needs to return to re-determine.

The channel number of the energy spectrum partitions in the recombined energy spectrum segment and the channel number of the energy spectrum partitions in the reference energy spectrum segment are calculated first, the difference therebetween is compared with the preset difference threshold, and if the difference does not exceed the preset difference threshold, it means that the difference between the channel number of the recombined energy spectrum segment and the channel number of the reference energy spectrum segment is small, it does not need to return to perform the operation of re-determining the reserved energy spectrum segment, and the marked energy spectrum segment may just be used as the target counting window for the energy spectrum to be processed.

According to the technical solution of the embodiment of the present application, an energy spectrum to be processed is acquired, the energy spectrum to be processed is partitioned into at least two energy spectrum partitions according to channels, so as to perform preliminary partitioning of the energy spectrum to be processed, and at least one candidate energy spectrum segment is determined according to the at least two energy spectrum partitions, a window locating index of each candidate energy spectrum segment is determined, and a marked energy spectrum segment is determined from the at least one candidate energy spectrum segment according to the window locating index of the at least one candidate energy spectrum segment, so as to preliminarily screen counting windows, determine a reserved energy spectrum segment according to the marked energy spectrum segment, and determine a reference energy spectrum segment according to the reserved energy spectrum segment, and determine at least one recombined energy spectrum segment according to the reference energy spectrum segment and the energy spectrum partitions located at the two ends of the reference energy spectrum segment. If the window locating index of at least one recombined energy spectrum segment in all the recombined energy spectrum segments is better than the window locating index of the reference energy spectrum segment, the reference energy spectrum segment is updated as a recombined energy spectrum segment with the optimal window locating index, and it returns to perform the operation of determining at least one recombined energy spectrum segment according to the reference energy spectrum segment and the energy spectrum partitions located at the two ends of the reference energy spectrum segment; and if the window locating index of each of the recombined energy spectrum segments is not better than the window locating index of the reference energy spectrum segment, the reference energy spectrum segment is used as a marked energy spectrum segment, for updating and determining the marked energy spectrum segment, if the window locating index of at least one recombined energy spectrum segment in all the recombined energy spectrum segments is better than the window locating index of the reference energy spectrum segment, the reference energy spectrum segment is updated as a recombined energy spectrum segment with the optimal window locating index, and it returns to perform the operation of determining at least one recombined energy spectrum segment according to the reference energy spectrum segment and the energy spectrum partitions located at the two ends of the reference energy spectrum segment; and if the window locating index of each of the recombined energy spectrum segments is not better than the window locating index of the reference energy spectrum segment, the reference energy spectrum segment is used as a marked energy spectrum segment, thereby addressing the issue of low calculation efficiency and poor practicability in determining the counting window, thereby achieving the technical effects of automatic locating of the counting window of the energy spectrum, reduction of the time complexity, and improvement of practicability.

Fourth Embodiment

Before the technical solution of the embodiment of the present application is introduced, the technical background is introduced first.

Since the γ-rays and α-rays released by radioisotopes are of single energy or multiple single energies, the energy spectrum of γ-rays measured by the γ-spectrometer and the energy spectrum of α-rays measured by the α-spectrometer are generally approximate to a relatively sharp normal distribution count peak, there are relatively mature algorithms in the industry to automatically find the count peak position and its boundary as the counting window of the corresponding isotope. However, for the energy spectrum measured by a liquid scintillation counter, there is no good method for automatically locating the counting window in the industry. This is mainly because the liquid scintillation counter is generally used to measure the β ray whose energy is in a continuous spectrum, and the liquid scintillation counter often has the quenching effect in measuring, resulting in different degrees of deformation and movement of the energy spectrum, moreover, the measured energy spectrum generally does not show a sharp normal distribution, and is even relatively flat, so the existing automatic peak-finding technology is no longer applicable.

Aiming at the issue of optimally selecting the count range of the energy spectrum measured by the liquid scintillation counter, the academic community has proposed the optimization principle of figure of merit (FOM): among all the candidate counting windows, the window with the optimal value of FOM is selected as the optimally selected counting window, the FOM value is generally defined as the quotient of the square of detection efficiency and the background counting rate, and when the value of the FOM is larger, the FOM is better. However, as a guiding principle, the optimization principle of FOM lacks an implementation method. A conceivable method is to traverse all possible counting windows and compare their corresponding figures of merit to optimally selecting the counting window, but this method is too inefficient and not practical. So far, in the industry, all manufacturers of liquid scintillation counters have preset the counting windows of several common isotopes (such as $^3$H, $^{14}$C, $^{32}$P) under certain conditions (for example, when the quenching effect can be ignored) in the instrument. When the isotope to be measured is not within the preset range, or the energy spectrum changes significantly due to the quenching effect, the instrument cannot give an appropriate counting window, making it difficult to analyze the energy spectrum.

A method for locating a counting window of an energy spectrum is provided according to the fourth embodiment of the present application. Explanations of terms that are the same as or corresponding to those of the above embodiments are not repeated here. The method for locating a counting window of an energy spectrum according to the fourth embodiment of the present application includes steps as follows.

In a step a), the energy spectrum to be processed is partitioned into several partitions according to channels (for example, 8-15 contiguous partitions, that is, energy spectrum partitions).

It is to be noted that, assuming that the energy spectrum width is L, that is, the total number of channels contained in the energy spectrum to be processed is L, and L meets $2^k \leq L < 2^{k+1}$, then the width of each partition is $2^{k-3}$, and if there are remaining channels not classified into a partition, the remaining channels will be merged into the last partition. If the width of the energy spectrum is less than 8, each energy spectrum region with an energy spectrum width of 1 is used as one energy spectrum partition.

Exemplarily, for an energy spectrum to be processed with an energy spectrum width of 256 (since $256=2^8$, in this case, k=8), the width of each partition is 32 ($2^5=32$), and the energy spectrum is partitioned into 8 partitions in total.

In a step b), each partition itself is taken as a candidate energy spectrum segment, window locating indexes of the candidate energy spectrum segments are calculated, and the candidate energy spectrum segment with the largest window locating index is used as a reference energy spectrum segment.

The window locating index F is defined as follows, when the window locating index is larger, it is better:

$$F(R) = \frac{\sum_{i \in R}(N_i/T_S - B_i/T_B)^2}{\sum_{i \in R}B_i/T_B}$$

where, F(R) is a window locating index of an energy spectrum segment R, i is a channel serial number in the candidate energy spectrum segment R, $N_i$ is a sample measurement spectrum count corresponding to the channel i, and $B_i$ is a background measurement spectrum count corresponding to the channel i, $T_S$ is a measurement live time of a sample measurement spectrum, and $T_B$ is a measurement live time of a background measurement spectrum.

In a step c), the following three recombined energy spectrum segments are determined according to the reference energy spectrum segment (both the reference energy spectrum segment and the recombined energy spectrum segments belong to candidate energy spectrum segments): (i) a segment obtained by merging the reference energy spectrum segment and at least one partition adjacent to a left end of the reference energy spectrum segment; (ii) a segment obtained by merging the reference energy spectrum segment and at least one partition adjacent to a right end of the reference energy spectrum segment; (iii) a segment obtained by merging the reference energy spectrum segment and adjacent partitions adjacent to the left and right ends of the reference energy spectrum segment. If the window locating index of any of the recombined energy spectrum segments is better than the window locating index of the reference energy spectrum segment, the reference energy spectrum segment is updated as a recombined energy spectrum segment with the optimal window locating index, and the step c) is repeatedly performed, and if the window locating index of each of the recombined energy spectrum segments is not better than the window locating index of the reference energy spectrum segment, a step d) is performed.

In the step d), the reference energy spectrum segment is used as a marked energy spectrum segment.

In a step e), a reserved energy spectrum segment is determined according to the marked energy spectrum segment, the reserved energy spectrum segment is repartitioned, and the marked energy spectrum segment is updated according to the partitions obtained after the new partitioning.

In a step e.1), if the marked energy spectrum segment contains only two or less partitions, the marked energy spectrum segment and two partitions adjacent to but outside the marked energy spectrum segment are merged as a reserved energy spectrum segment. Referring to step a), the reserved energy spectrum segment is repartitioned into eight to fifteen contiguous partitions, and then steps b) to d) are performed to update the marked energy spectrum segment.

In a step e.2), if the marked energy spectrum segment contains three or more partitions, the segments composed of the following three segments are used as reserved energy spectrum segments: (i) an energy spectrum segment remained after a leftmost partition and a rightmost partition in the marked energy spectrum segment are removed; (ii) an energy spectrum segment obtained by merging a leftmost partition in the marked energy spectrum segment and at least one partition adjacent to the left end of the marked energy spectrum segment but outside the marked energy spectrum segment; (iii) an energy spectrum segment obtained by merging a rightmost partition in the marked energy spectrum segment and at least one partition adjacent to the right end of the marked energy spectrum segment but outside the marked energy spectrum segment.

The method for partitioning the reserved energy spectrum segments is as follows: the energy spectrum segment (i) is merged into one partition, and the energy spectrum segment (ii) and the energy spectrum segment (iii) are each partitioned into four to seven contiguous partitions (the width of each partition is $2^{k-2}$-2) according to the step a); then the partition obtained by merging the energy spectrum segment (i) is used as a reference energy spectrum segment, and the steps c)-d) are performed to update the marked energy spectrum segment.

In a step f), the step e) is repeatedly performed until the following preset ending partitioning condition is met, the marked energy spectrum segment is used as a target counting window of the energy spectrum to be processed. The preset ending partitioning condition includes: in e.1), the partition width by which the reserved energy spectrum segment is partitioned is: 1, or in e.2), the partition width by which each of the energy spectrum segment (ii) and energy spectrum segment (iii) in the reserved energy spectrum segment is partitioned is 1.

The following examples are used to illustrate the process of determining the target counting window in the embodiment of the present application.

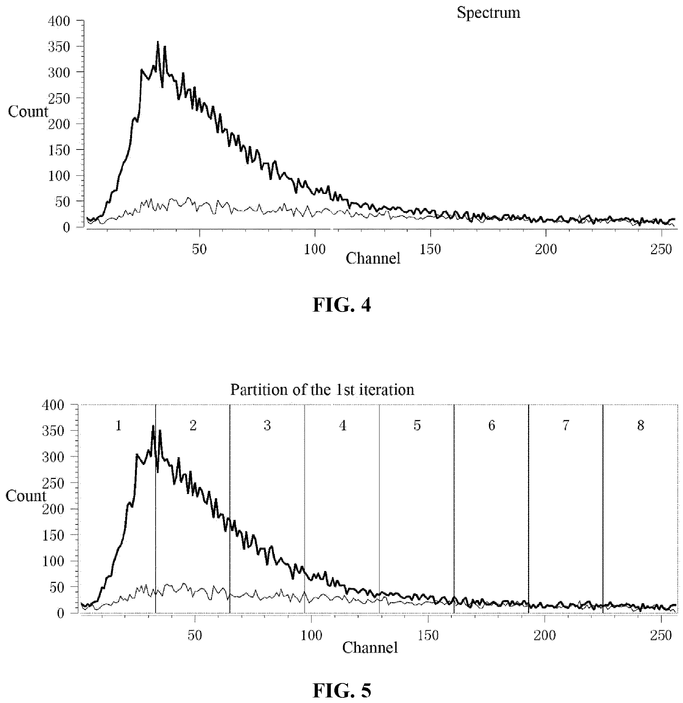

FIG. 4 is a schematic diagram of an energy spectrum to be processed, showing a measured energy spectrum whose counting window is to be automatically located, where the thick line represents a sample measurement spectrum, and the thin line represents a background measurement spectrum.

FIG. 5 is a schematic diagram of an energy spectrum showing a partitioning of the first iteration. As shown in FIG. 5, the entire energy spectrum is partitioned into 8 equal-width partitions according to the channels, and the width of each partition is 32.

Table 2 shows the boundary channels of each partition and its window locating index in the first partitioning, where, the No. 2 partition has the largest window locating index of 0.4232, and is determined as an initial reference energy spectrum segment.

Table 2

| Partition serial No. | Left boundary | Right boundary | Window locating index |
|---|---|---|---|
| 1 | 1 | 32 | 0.2512 |
| 2 | 33 | 64 | 0.4232 |
| 3 | 65 | 96 | 0.1033 |
| 4 | 97 | 128 | 0.0124 |
| 5 | 129 | 160 | 0.0022 |
| 6 | 161 | 192 | 0.0003 |
| 7 | 193 | 224 | 0.0001 |
| 8 | 225 | 256 | 0.0003 |

Table 3 shows the update process of the marked energy spectrum segment in the first partitioning. The partition serial number is used to represent the marked energy spectrum segment in the table. For example: an energy spectrum segment 2 indicates the energy spectrum segment formed by a partition 2 alone, and an energy spectrum segment 1-3 represents the energy spectrum segment jointly formed by partitions 1, 2, and 3. The partition 2 has been determined as an initial reference energy spectrum segment previously, and then the window locating index of each of energy spectrum segments 2, 1-2, 2-3 and 1-3 is calculated, among which the energy spectrum segment 1-3 has the largest window locating index, therefore, the reference energy spectrum segment is updated as the energy spectrum segment 1-3; then the window locating index of each of the energy spectrum segments 1-3 and 1-4 (partition 1 is already the leftmost partition, so the segment obtained by merging the partition 1 with a partition adjacent to the left end does not need to be considered) is calculated, the energy spectrum segment 1-3 still has the largest window locating index, therefore, the energy spectrum segment 1-3 obtained after the first partitioning is the final reference energy spectrum segment, and the marked energy spectrum segment is updated as the energy spectrum segment 1-3. Tables 5, 7, 9, 11 and 13 sequentially represent the update process of the reference energy spectrum segment after each partitioning.

Table 3

| Update step No. | Reference energy spectrum segment | Channel interval | Window locating index |
|---|---|---|---|
| 1 | 2 | [33,64] | 0.4232 |
| 2 | 1-3 | [1,96] | 0.7364 |

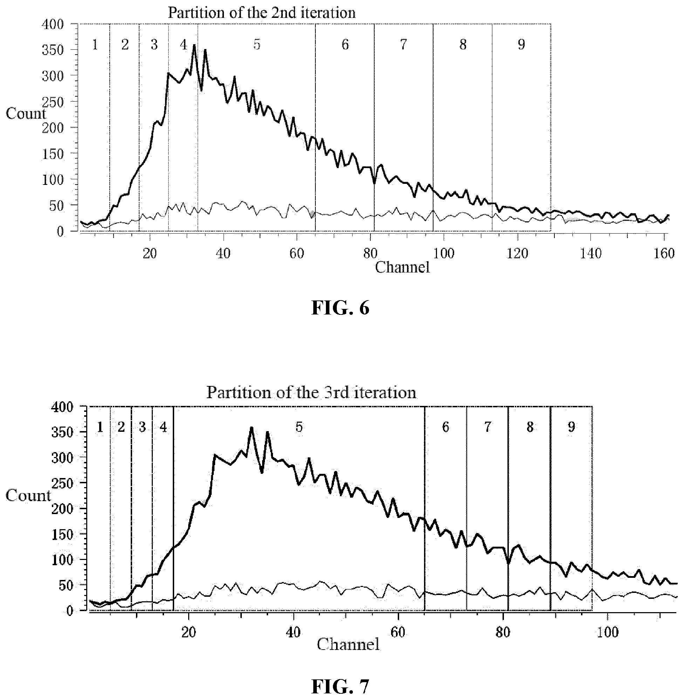

Next, FIG. 6 is a schematic diagram of an energy spectrum showing a partitioning of the second iteration. It is determined through the first partitioning that the energy spectrum segment 1-3 is the marked energy spectrum segment, the energy spectrum segment 1-3 contains 3 partitions, so the energy spectrum segment 1-3 is partitioned according to the step e.2). The original energy spectrum segment 1 (channel 1-32) is partitioned into four partitions, the original energy spectrum segment 2 (channels 33-64) is defined as one partition, and is used as an initial reference energy spectrum segment, and the original energy spectrum segment 3-4 (channels 65-128) is partitioned into four partitions.

Table 4 shows the boundary channels and the window locating index of each partition in the second partitioning.

Table 4

| Partition serial No. | Left boundary | Right boundary | Window locating index |
|---|---|---|---|
| 1 | 1 | 8 | 0.0004 |
| 2 | 9 | 16 | 0.0193 |
| 3 | 17 | 24 | 0.0886 |

(continued)

| Partition serial No. | Left boundary | Right boundary | Window locating index |
|---|---|---|---|
| 4 | 25 | 32 | 0.1772 |
| 5 | 33 | 64 | 0.4232 |
| 6 | 65 | 80 | 0.0811 |
| 7 | 81 | 96 | 0.0284 |
| 8 | 97 | 112 | 0.0095 |
| 9 | 113 | 128 | 0.0034 |

Table 5 shows the update process of the marked energy spectrum segment in the second partitioning. It has been determined previously that the partition 5 is the initial reference energy spectrum segment, and then the energy spectrum segment 2-6 in the second partitioning is determined as the final reference energy spectrum segment and is updated as the marked energy spectrum segment.

Table 5

| Update step No. | Reference energy spectrum segment | Channel interval | Window locating index |
|---|---|---|---|
| 3 | 5 | [33,64] | 0.4232 |
| 4 | 4-6 | [25,80] | 0.6593 |
| 5 | 3-6 | [17,80] | 0.7462 |
| 6 | 2-6 | [9,80] | 0.7624 |

Next, FIG. 7 is a schematic diagram of an energy spectrum showing a partitioning of the third iteration. It is determined through the second partitioning that the energy spectrum segment 2-6 is a marked energy spectrum segment. The energy spectrum segment 2-6 includes five partitions, so the energy spectrum segment 2-6 is partitioned according to the step e.2). The original energy spectrum segment 1-2 (channels 1-16) is partitioned into four partitions, the original energy spectrum segment 3-5 (channels 17-64) is defined as one partition, and is used as the initial reference energy spectrum segment, the original energy spectrum segment 6-7 (channels 65-96) is partitioned into four partitions.

Table 6 shows the boundary channels and the window locating index of each partition in the third partitioning.

Table 6

| Partition serial No. | Left boundary | Right boundary | Window locating index |
|---|---|---|---|
| 1 | 1 | 4 | 0.0001 |
| 2 | 5 | 8 | 0.0004 |
| 3 | 9 | 12 | 0.0049 |
| 4 | 13 | 16 | 0.0152 |
| 5 | 17 | 64 | 0.6817 |
| 6 | 65 | 72 | 0.0487 |
| 7 | 73 | 80 | 0.0329 |
| 8 | 81 | 88 | 0.0170 |
| 9 | 89 | 96 | 0.0116 |

Table 7 shows the update process of the marked energy spectrum segment in the third partitioning. It has been determined previously that the partition 5 is the initial reference energy spectrum segment, and then the energy spectrum segment 3-7 in the third partitioning is determined as the final reference energy spectrum segment and is updated as the marked energy spectrum segment.

Table 7

| Update step No. | Reference energy spectrum segment | Channel interval | Window locating index |
|---|---|---|---|
| 7 | 5 | [17,64] | 0.6817 |
| 8 | 4-6 | [13,72] | 0.7379 |
| 9 | 3-7 | [9,80] | 0.7624 |

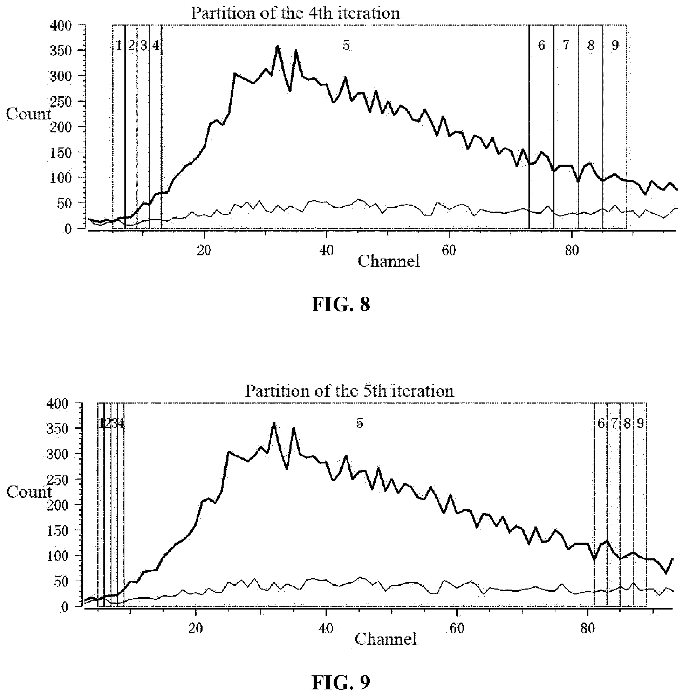

Next, FIG. 8 is a schematic diagram of an energy spectrum showing a partitioning of the fourth iteration. It is determined through the third partitioning that the energy spectrum segment 3-7 is the marked energy spectrum segment. The energy spectrum segment 3-7 includes five partitions, so the energy spectrum segment 3-7 is partitioned according to the step e.2). The original energy spectrum segment 2-3 (channels 5-12) is partitioned into four partitions, the original energy spectrum segment 4-6 (channels 13-72) is defined as one partition, and is used as the initial reference energy spectrum segment, the original energy spectrum segment 7-8 (channels 73-88) is partitioned into four partitions.

Table 8 shows the boundary channels and the window locating index of each partition in the fourth partitioning.

Table 8

| Partition serial No. | Left boundary | Right boundary | Window locating index |
|---|---|---|---|
| 1 | 5 | 6 | 0.0000 |
| 2 | 7 | 8 | 0.0010 |
| 3 | 9 | 10 | 0.0022 |
| 4 | 11 | 12 | 0.0028 |
| 5 | 13 | 72 | 0.7379 |
| 6 | 73 | 76 | 0.0163 |
| 7 | 77 | 80 | 0.0168 |
| 8 | 81 | 84 | 0.0123 |
| 9 | 85 | 88 | 0.0057 |

Table 9 shows the update process of the marked energy spectrum segment in the fourth partitioning. It has been determined previously that the partition 5 is the initial reference energy spectrum segment, and then the energy spectrum segment 2-8 in the fourth partitioning is determined as the final reference energy spectrum segment and is updated as the marked energy spectrum segment.

Table 9

| Update step No. | Reference energy spectrum segment | Channel interval | Window locating index |
|---|---|---|---|
| 10 | 5 | [13,72] | 0.7379 |
| 11 | 4-6 | [11,76] | 0.7477 |
| 12 | 3-7 | [9,80] | 0.7624 |
| 13 | 2-8 | [7,84] | 0.7690 |

Next, FIG. 9 is a schematic diagram of an energy spectrum showing a partitioning of the fifth iteration. It is determined through the fourth partitioning that the energy spectrum segment 2-8 is the marked energy spectrum segment. The energy spectrum segment 2-8 includes seven partitions, so the energy spectrum segment 2-8 is partitioned according to the step e.2). The original energy spectrum segment 1-2 (channels 5-8) is partitioned into four partitions, the original energy spectrum segment 3-7 (channels 9-80) is defined as one partition, and is used as the initial reference energy spectrum segment, the original energy spectrum segment 8-9 (channels 81-88) is partitioned into four partitions.

Table 10 shows the boundary channels and the window locating index of each partition in the fifth partitioning.

Table 10

| Partition serial No. | Left boundary | Right boundary | Window locating index |
|---|---|---|---|
| 1 | 5 | 5 | 0.0000 |
| 2 | 6 | 6 | 0.0000 |
| 3 | 7 | 7 | 0.0004 |
| 4 | 8 | 8 | 0.0006 |
| 5 | 9 | 80 | 0.7624 |
| 6 | 81 | 82 | 0.0054 |
| 7 | 83 | 84 | 0.0069 |
| 8 | 85 | 86 | 0.0029 |
| 9 | 87 | 88 | 0.0028 |

Table 11 shows the update process of the marked energy spectrum segment in the fifth partitioning. It has been determined previously that the partition 5 is the initial reference energy spectrum segment, and then the energy spectrum segment 4-7 in the fifth partitioning is determined as the final reference energy spectrum segment and is updated as the marked energy spectrum segment.

Table 11

| Update step No. | Reference energy spectrum segment | Channel interval | Window locating index |
|---|---|---|---|
| 14 | 5 | [9,80] | 0.7624 |
| 15 | 4-6 | [8,82] | 0.7646 |
| 16 | 4-7 | [8,84] | 0.7692 |

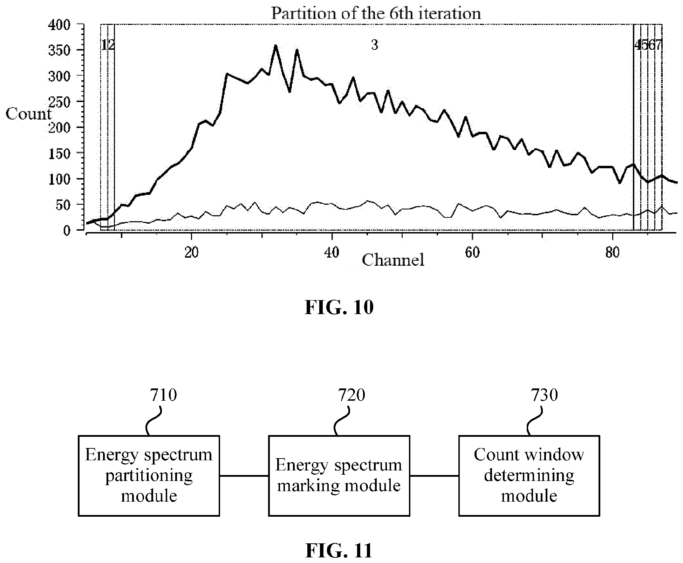

Next, FIG. 10 is a schematic diagram of an energy spectrum showing a partitioning of the sixth iteration. It is determined according to the fifth partitioning that the energy spectrum segment 4-7 is the marked energy spectrum segment. The energy spectrum segment 4-7 includes four partitions, so the energy spectrum segment 4-7 is partitioned according to the step e.2). The original energy spectrum segment 3-4 (channels 7-8) has a partition width of 1, and does not need to be partitioned, the original energy spectrum segment 5-6 (channels 9-82) is defined as one partition, and is used as the initial reference energy spectrum segment, the original energy spectrum segment 7-8 (channels 83-86) is partitioned into four partitions.

Table 12 shows the boundary channels and the window locating index of each partition in the sixth partitioning.

Table 12

| Partition serial No. | Left boundary | Right boundary | Window locating index |
|---|---|---|---|
| 1 | 7 | 7 | 0.0004 |
| 2 | 8 | 8 | 0.0006 |
| 3 | 9 | 82 | 0.7643 |
| 4 | 83 | 83 | 0.0050 |
| 5 | 84 | 84 | 0.0023 |
| 6 | 85 | 85 | 0.0010 |
| 7 | 86 | 86 | 0.0020 |

Table 13 shows the update process of the marked energy spectrum segment in the sixth partitioning. It has been determined previously that partition 3 is the initial reference energy spectrum segment, and then the energy spectrum segment 2-5 in the sixth partitioning is determined as the final reference energy spectrum segment and is updated as which the marked energy spectrum segment.

Table 13

| Update step No. | Reference energy spectrum segment | Channel interval | Window locating index |
|---|---|---|---|
| 17 | 3 | [9,82] | 0.7643 |
| 18 | 2-4 | [8,83] | 0.7692 |
| 19 | 2-5 | [8,84] | 0.7692 |

Since the sixth partitioning meets the preset ending partitioning condition, the marked energy spectrum segment 2-5 (channels 8 to 84) of this partitioning is taken as the target counting window.

In the technical solution of the embodiment of the present application, the energy spectrum to be processed is partitioned into at least two energy spectrum partitions according to the channels, each energy spectrum partition is determined as a candidate energy spectrum segment, a marked energy spectrum segment is determined based on window locating indexes of multiple candidate energy spectrum segments, and the marked energy spectrum segment is expanded to new candidate energy spectrum segments, so as to update the marked energy spectrum segment according to the window locating indexes until the marked energy spectrum segment no longer changes, a reserved energy spectrum segment is determined according to the marked energy spectrum segment, the reserved energy spectrum segment is re-partitioned, and the marked energy spectrum segment is updated according to the partitions obtained from the repartitioning. When a preset ending partitioning condition is met, the updated marked energy spectrum segment is used as a target counting window of the energy spectrum to be processed, thereby addressing the issue of low calculation efficiency and poor practicability in determining the counting window, achieving the technical effects of automatic locating of the counting window of the spectrum of radiative energy, reduction of the time complexity, and improvement of practicability.

Fifth Embodiment

FIG. 11 is a schematic structural diagram of an energy spectrum counting window device according to a fifth embodiment of the present application. As shown in FIG. 11, the device includes: an energy spectrum partitioning module 710, an energy spectrum segment marking module 720 and a counting window determining module 730.

The Energy spectrum partitioning module 710 is configured to acquire an energy spectrum to be processed, and partition the energy spectrum to be processed into at least two energy spectrum partitions according to channels, and determine at least one candidate energy spectrum segment according to the at least two energy spectrum partitions, where, each candidate energy spectrum segment includes at least one energy spectrum partition; the energy spectrum segment marking module 720 is configured to determine a window locating index of each candidate energy spectrum segment, and determine a marked energy spectrum segment from the at least one candidate energy spectrum segment according to the window locating index of each candidate energy spectrum segment; the counting window determining module 730 is configured to determine a target counting window of the energy spectrum to be processed according to the marked energy spectrum segment.

Optionally, the counting window determining module 730 is further configured to determine a reserved energy spectrum segment according to the marked energy spectrum segment; partition the reserved energy spectrum segment to obtain multiple energy spectrum partitions corresponding to the reserved energy spectrum segment, and update the marked energy spectrum segment according to the multiple energy spectrum partitions corresponding to the reserved energy spectrum segment; if a preset ending partitioning condition is met, use the updated marked energy spectrum segment as a target counting window of the energy spectrum to be processed; and if the preset ending partitioning condition is not met, return to perform the operation of determining a reserved energy spectrum segment according to the marked energy spectrum segment.

Optionally, the counting window determining module 730 is further configured to use the marked energy spectrum segment as a reserved energy spectrum segment; or, merge a first preset number of energy spectrum partitions adjacent to at least one of two ends of the marked energy spectrum segment into the marked energy spectrum segment to obtain a reserved energy spectrum segment; or merge a second preset number of channels adjacent to at least one of the two ends of the marked energy spectrum segment into the marked energy spectrum segment to obtain a reserved energy spectrum segment.

Optionally, the counting window determining module 730 is further configured to determine a reference energy spectrum segment according to the reserved energy spectrum segment, and determine at least one recombined energy spectrum segment according to the reference energy spectrum segment and at least one energy spectrum partition located at two ends of the reference energy spectrum segment; if a window locating index of at least one recombined energy spectrum segment in all recombined energy spectrum segments is better than a window locating index of the reference energy spectrum segment, update the reference energy spectrum segment as a recombined energy spectrum segment with the optimal window locating index, and return to perform the operation of determining at least one recombined energy spectrum segment according to the reference energy spectrum segment and the at least one energy spectrum partition located at the two ends of the reference energy spectrum segment; and if a window locating index of each of the at least one recombined energy spectrum segment is not better than the window locating index of the reference energy spectrum segment, use the reference energy spectrum segment as a marked energy spectrum segment.

Optionally, the counting window determining module 730 is configured to determine window locating indexes of multiple energy spectrum partitions of the reserved energy spectrum segment, and use an energy spectrum partition with the window locating index meeting a preset reference condition as a reference energy spectrum segment, or, if the number of energy spectrum partitions in the marked energy spectrum segment is greater than a preset partition number threshold, remove a third preset number of energy spectrum partitions located at at least one of two ends of the reserved energy spectrum segment from the reserved energy spectrum segment to obtain a reference energy spectrum segment; determine an energy spectrum segment to be combined according to a fourth preset number of energy spectrum partitions adjacent to at least one of the two ends of the reference energy spectrum segment, and merge the reference energy spectrum segment and the energy spectrum segment to-be-combined to obtain at least one recombined energy spectrum segment.

Optionally, the counting window determining module 730 is configured to use the reserved energy spectrum segment as a reference energy spectrum segment, and determine an energy spectrum segment to be removed according to a fifth preset number of energy spectrum partitions located at at least one of the two ends of the reference energy spectrum segment, and remove the energy spectrum segment to be removed in the reference energy spectrum segment to obtain at least one recombined energy spectrum segment.

Optionally, the apparatus further includes: a determining module. The determining module is configured to use, if the difference between the number of channels of energy spectrum partitions respectively in each recombined energy spectrum segment and the number of channels of energy spectrum partitions respectively in the reference energy spectrum segment does not exceed a preset difference threshold, the marked energy spectrum segment as a target counting window of the energy spectrum to be processed.

Optionally, the counting window determining module 730 is configured to traverse combinations of the multiple energy spectrum partitions in the reserved energy spectrum segment to obtain at least one combined energy spectrum segment, where each combined energy spectrum segment is obtained by combining two or more contiguously arranged energy spectrum partitions; and update the marked energy spectrum segment according to window locating indexes of the multiple energy spectrum partitions in the reserved energy spectrum segment and window locating indexes of the at least one combined energy spectrum segment.

Optionally, the counting window determining module 730 is configured to partition the reserved energy spectrum segment into at least two energy spectrum partitions according to the total number of channels and a preset number of channels included in an energy spectrum partition; or partition the reserved energy spectrum segment into at least two energy spectrum partitions according to the total number of channels and a preset number of partitions corresponding to energy spectrum partitions; or partition the reserved energy spectrum segment into at least two energy spectrum partitions according to the distribution of energy spectrum data of the reserved energy spectrum segment; or partition the reserved energy spectrum segment into at least two energy spectrum partitions based on a preset random algorithm; or determine an energy spectrum segment to be repartitioned according to the number of the multiple energy spectrum partitions in the reserved energy spectrum segment and arrangement information of at least one channel segment corresponding to the multiple energy spectrum partitions, partition the energy spectrum segment to be repartitioned, and obtain multiple energy spectrum partitions corresponding to the reserved energy spectrum segment according to the repartitioned result of the energy spectrum segment to be repartitioned.

Optionally, the counting window determining module 730 is configured to use the whole reserved energy spectrum segment as an energy spectrum segment to be repartitioned if the total number of energy spectrum partitions contained in the reserved energy spectrum segment does not reach a first preset number threshold; and use an energy spectrum segment composed of a sixth preset number of energy spectrum partitions located at at least one of the two ends of the reserved energy spectrum segment as an energy spectrum segment to be repartitioned if the total number of energy spectrum partitions contained in the reserved energy spectrum segment reaches a second preset number threshold.

Optionally, the preset ending partitioning condition includes that the number of at least one channel included in at least one energy spectrum partition in the reserved energy spectrum segment except for the marked energy spectrum segment reaches a first preset channel number threshold; or the number of update times of the marked energy spectrum segment reaches a preset number of times threshold; or if the marked energy spectrum segment is updated consecutively for a preset number of times, the change of a window locating index of the marked energy spectrum segment after each update does not exceed a preset change amount; or the window locating index of the marked energy spectrum segment is better than a preset window locating index threshold.

Optionally, the energy spectrum segment labeling module 720 is configured to determine a window locating index of each candidate energy spectrum segment according to energy spectrum data of the respective candidate energy spectrum segment or according to energy spectrum data of the respective candidate energy spectrum segment and energy spectrum data of at least one candidate energy spectrum segment in all candidate energy spectrum segments; or, determine a window locating index of each candidate energy spectrum segment according to energy spectrum data of the respective candidate energy spectrum segment and energy spectrum data of the energy spectrum to be processed or according to energy spectrum data of the respective candidate energy spectrum segment and energy spectrum data of at least one candidate energy spectrum segment in all candidate energy spectrum segments and energy spectrum data of the energy spectrum to be processed; or, determine a window locating index of each candidate energy spectrum segment according to energy spectrum data of the respective candidate energy spectrum segment and measurement sample data corresponding to the energy spectrum to be processed or according to energy spectrum data of the respective candidate energy spectrum segment, energy spectrum data of at least one candidate energy spectrum segment in all candidate energy spectrum segments and measurement sample data corresponding to the energy spectrum to be processed; or determine a window locating index of each candidate energy spectrum segment according to energy spectrum data of the respective candidate energy spectrum segment and measurement environment data corresponding to the energy spectrum to be processed or according to energy spectrum data of the respective candidate energy spectrum segment, energy spectrum data of at least one candidate energy spectrum segment in all candidate energy spectrum segments and measurement environment data corresponding to the energy spectrum to be processed; or determine a window locating index of each candidate energy spectrum segment according to energy spectrum data of the respective candidate energy spectrum segment, measurement sample data corresponding to the energy spectrum to be processed and measurement environment data corresponding to the energy spectrum to be processed or according to energy spectrum data of the respective candidate energy spectrum segment, energy spectrum data of at least one candidate energy spectrum segment in all candidate energy spectrum segments, measurement sample data corresponding to the energy spectrum to be processed and measurement environment data corresponding to the energy spectrum to be processed.

Optionally, the energy spectrum data includes at least one of sample count, background count, measurement time, channel and energy; the measurement sample data includes at least one of measurement sample activity, measurement sample volume and measurement sample mass; and the measurement environmental data includes at least one of temperature, humidity, particle count, dust, and electromagnetic measurement in the measurement environment.

According to the technical solution of the embodiment of the present application, an energy spectrum to be processed is acquired, the energy spectrum to be processed is partitioned into at least two energy spectrum partitions according to channels, so as to perform preliminary partitioning of the energy spectrum to be processed, and at least one candidate energy spectrum segment is determined according to the energy spectrum partitions, a window locating index of each candidate energy spectrum segment is determined, and a marked energy spectrum segment is determined from the at least one candidate energy spectrum segment according to the window locating index of the at least one candidate energy spectrum segment, so as to preliminarily screen counting windows, determine a target counting window of the energy spectrum to be processed according to the marked energy spectrum segment, thereby addressing the issue of low calculation efficiency and poor practicability in determining the counting window, achieving the technical effects of automatic locating of the counting window of the energy spectrum, reduction of the time complexity, and improvement of practicability.

The energy spectrum counting window locating apparatus according to the embodiment of the present application can be used to perform the method for locating an energy spectrum counting window according to any embodiment of the present application, and has corresponding functional modules for performing the method.

Sixth Embodiment

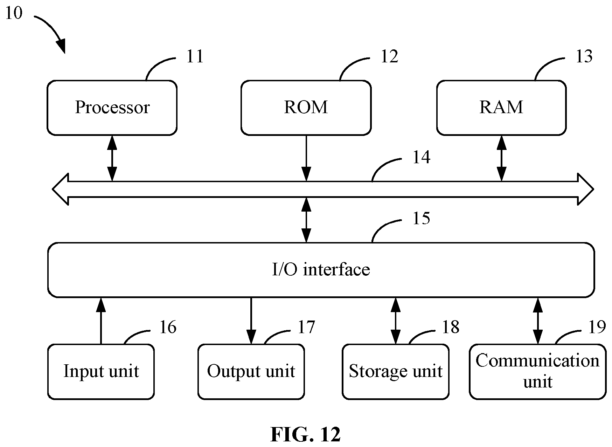

FIG. 12 shows a schematic structural diagram of an electronic device 10 that can be used to implement an embodiment of the present application. It is intended to use electronic device to represent various forms of digital computers, such as laptops, desktops, workstations, personal digital assistants, servers, blade servers, mainframes, and other suitable computers. Electronic devices may further represent various forms of mobile devices, such as personal digital processing, cellular phones, smart phones, wearable devices (e.g., helmets, glasses, watches, etc.), and other similar computing devices. The components shown herein, their connections and relationships, and their functions, are used as examples only, and are not intended to limit implementations of the applications described and/or claimed herein.

As shown in FIG. 12, the electronic device 10 includes at least one processor 11, and a memory communicatively connected with the at least one processor 11, such as a read-only memory (ROM) 12, a random access memory (RAM) 13, etc., where the memory stores a computer program executable by at least one processor, and the processor 11 can perform various appropriate actions and processes according to a computer program stored in the ROM 12 or a computer program loaded from a storage unit 18 into the RAM 13. In the RAM 13, various programs and data necessary for the operation of the electronic device 10 may further be stored. The processor 11, ROM 12, and RAM 13 are connected to each other through a bus 14. An input/output (I/O) interface 15 is also connected to the bus 14.

Multiple components in the electronic device 10 are connected to the I/O interface 15, include: an input unit 16, such as a keyboard, a mouse, etc.; an output unit 17, such as various types of displays, speakers, etc.; a storage unit 18, such as a magnetic disk, an optical disk etc.; and a communication unit 19, such as a network card, a modem, a wireless communication transceiver, and the like. The communication unit 19 allows the electronic device 10 to exchange information/data with other devices through a computer network such as the Internet and/or various telecommunication networks.

The processor 11 may be various general and/or special purpose processing components having processing and computing capabilities. Some examples of the processor 11 include, but are not limited to, a central processing unit (CPU), a graphics processing unit (GPU), various dedicated artificial intelligence (AI) computing chips, various processors that run machine learning model algorithms, digital signal processing processors (DSP), and any suitable processor, controller, microcontroller, etc. The processor 11 performs the various methods and processes described above, such as the method for locating an energy spectrum counting window.

In some embodiments, the method for locating a counting window of an energy spectrum can be implemented as a computer program, which is tangibly contained in a computer-readable storage medium, for example, a storage unit 18. In some embodiments, part or all of the computer program may be loaded and/or installed on the electronic device 10 via the ROM 12 and/or the communication unit 19. When the computer program is loaded into the RAM 13 and performed by the processor 11, one or more steps of the method for locating an energy spectrum counting window described above can be performed. Optionally, in other embodiments, the processor 11 may be configured in any other appropriate way (for example, by means of firmware) to perform the method for locating an energy spectrum counting window.

Various implementations of the system and technique described above herein can be implemented in a digital electronic circuit system, an integrated circuit system, a field programmable gate array (FPGA), an application specific integrated circuit (ASIC), application specific standard parts (ASSPs), a system on chip (SOC), a complex programmable logic device (CPLD), a computer hardware, firmware, software, and/or combinations thereof. These various embodiments may include being implemented in one or more computer programs which can be performed and/or interpreted on a programmable system including at least one programmable processor, the programmable processor can be a special-purpose or general-purpose programmable processor, can receive data and instruction from storage system, at least one input device, and at least one output device, and transmit data and instruction to the storage system, the at least one input device, and the at least one output device.

The one or more computer programs for implementing the method of the present application may be written in one programming language or any combination of more programming languages. These computer programs can be provided to a processor of a general-purpose computer, a special-purpose computer or other programmable data processing apparatus, so that the computer programs, when being performed by the processor, causes the functions/operations specified in the flowchart and/or block diagram to be implemented. The computer programs may be performed entirely on the machine, partly on the machine, partly on the machine and partly on a remote machine as a stand-alone software package, or entirely on a remote machine or remote server.

In the context of the present application, a computer readable storage medium may be a tangible medium that may contain or store a computer program for use by an instruction execution system, apparatus or device or use in conjunction with an instruction execution system, apparatus or device. A computer readable storage medium may include, but is not limited to, an electronic, magnetic, optical, electromagnetic, infrared, or semiconductor system, apparatus, or device, or any suitable combination of the foregoing. Optionally, a computer readable storage medium may be a machine readable signal medium. More specific examples of machine-readable storage media would include one or more wire-based electrical connected or portable computer discs, hard drives, RAM, ROM, erasable programmable read-only memory (EPROM) or flash memory, optical fiber, compact disk read-only memory (CD-ROM), optical storage, magnetic storage, or any suitable combination of the foregoing.

In order to provide interaction with the user, the systems and techniques described herein can be implemented on an electronic device having a display device (e.g., a cathode ray tube (CRT) or liquid crystal display (LCD)) for displaying information to the user; and a keyboard and a pointing device (e.g., a mouse or a trackball) through which the user can provide input to the electronic device. Other kinds of devices can also be used to provide interaction with the user; for example, the feedback provided to the user can be any form of sensory feedback (e.g., visual feedback, auditory feedback, or tactile feedback); and can be in any form (including acoustic input, speech input or, tactile input) to receive input from the user.

The systems and techniques described herein can be implemented in a computing system that includes back-end components (e.g., as a data server), or a computing system that includes middleware components (e.g., an application server), or a computing system that includes front-end components (e.g., a user computer having a graphical user interface or web browser through which a user can interact with embodiments of the system and technique described herein), or be implemented in a computing system including any combination of such backend components, middleware components, or front-end components. The components of the system can be interconnected by any form or medium of digital data communication, (e.g., a communication network). Examples of communication network include: local area networks (LANs), wide area network (WAN), blockchain network, and the Internet.

A computing system can include a client and a server. The client and the server are generally remote from each other and typically interact through a communication network. The relationship of the client and the server arises by computer programs running on the respective computers and having a client-server relationship to each other. The server can be a cloud server, also known as a cloud computing server or a cloud host, and is a host product in the cloud computing service system to overcome the drawbacks of difficult management and weak business expansion in traditional physical hosts and virtual private servers VPSs.

It is to be understood that steps may be reordered, added or deleted using the various forms of flow shown above. For example, multiple steps described in the present application may be performed in parallel, sequentially, or in a different order, as long as the desired result of the technical solution of the present application can be achieved, which is not limited herein.

**Claims**

1. A method for locating a counting window of an energy spectrum, performed by an electronic device (10) and comprising:

   acquiring (S110) an energy spectrum to be processed, and partitioning the energy spectrum to be processed into at least two energy spectrum partitions according to channels, wherein each of the at least two energy spectrum partitions comprises at least one channel among the channels, and determining (S110) at least one candidate energy spectrum segment according to the at least two energy spectrum partitions, wherein each candidate energy spectrum segment comprises one energy spectrum partition or at least two adjacent energy spectrum partitions;
   determining (S120) a window locating index of each candidate energy spectrum segment, and determining a marked energy spectrum segment from the at least one candidate energy spectrum segment according to the window locating index of each candidate energy spectrum segment, wherein the marked energy spectrum segment comprises one candidate energy spectrum segment in the at least one candidate energy spectrum segment, or multiple contiguous candidate energy spectrum segments in the at least one candidate energy spectrum segment; and
   determining (S130) a target counting window of the energy spectrum to be processed according to the marked energy spectrum segment;
   wherein the determining a target counting window of the energy spectrum to be processed according to the marked energy spectrum segment comprises:

      determining (S230) a reserved energy spectrum segment according to the marked energy spectrum segment, wherein the marked energy spectrum segment is determined as the reserved energy spectrum segment, or the marked energy spectrum segment and a certain number of energy spectrum partitions adjacent to at least one of a left and right ends of the marked energy spectrum segment are determined as the reserved energy spectrum segment, or the marked energy spectrum segment and a certain number of channels adj acent to at least one of a left and right ends of the marked energy spectrum segment are determined as the reserved energy spectrum segment;
      partitioning (S240) the reserved energy spectrum segment to obtain a plurality of energy spectrum partitions corresponding to the reserved energy spectrum segment, and updating (S240) the marked energy spectrum segment according to the plurality of energy spectrum partitions corresponding to the reserved energy spectrum segment;
      if a preset ending partitioning condition is met, using (S250) the updated marked energy spectrum segment as the target counting window of the energy spectrum to be processed; and
      if the preset ending partitioning condition is not met, returning to perform the operation of determining (S230) the reserved energy spectrum segment according to the marked energy spectrum segment.

2. The method according to claim 1, wherein the determining a reserved energy spectrum segment according to the marked energy spectrum segment comprises:

   using the marked energy spectrum segment as the reserved energy spectrum segment; or,
   merging a first preset number of energy spectrum partitions adjacent to at least one of two ends of the marked energy spectrum segment into the marked energy spectrum segment to obtain the reserved energy spectrum segment; or

merging a second preset number of channels adjacent to at least one of the two ends of the marked energy spectrum segment into the marked energy spectrum segment to obtain the reserved energy spectrum segment.

3. The method according to claim 1, wherein the updating (S240) the marked energy spectrum segment according to the plurality of energy spectrum partitions corresponding to the reserved energy spectrum segment comprises:

determining (S340) a reference energy spectrum segment according to the reserved energy spectrum segment, and determining (S340) at least one recombined energy spectrum segment according to the reference energy spectrum segment and at least one energy spectrum partition located at two ends of the reference energy spectrum segment;

if a window locating index of a recombined energy spectrum segment in the at least one recombined energy spectrum segment is better than a window locating index of the reference energy spectrum segment, updating (S360) the reference energy spectrum segment as a recombined energy spectrum segment with an optimal window locating index, and returning to perform the operation of determining at least one recombined energy spectrum segment according to the reference energy spectrum segment and the at least one energy spectrum partition located at the two ends of the reference energy spectrum segment; and

if a window locating index of each of the at least one recombined energy spectrum segment is not better than the window locating index of the reference energy spectrum segment, using (S350) the reference energy spectrum segment as the marked energy spectrum segment.

4. The method according to claim 3, wherein the determining (S340) a reference energy spectrum segment according to the reserved energy spectrum segment, and determining (S340) at least one recombined energy spectrum segment according to the reference energy spectrum segment and at least one energy spectrum partition located at two ends of the reference energy spectrum segment, comprising:

determining window locating indexes of a plurality of energy spectrum partitions of the reserved energy spectrum segment, and determining an energy spectrum partition with the window locating index meeting a preset reference condition as the reference energy spectrum segment, or, if a number of energy spectrum partitions in the marked energy spectrum segment is greater than a preset partition number threshold, removing a third preset number of energy spectrum partitions located at at least one end of two ends of the reserved energy spectrum segment from the reserved energy spectrum segment to obtain a reference energy spectrum segment; and

determining an energy spectrum segment to be combined according to a fourth preset number of energy spectrum partitions adjacent to at least one of the two ends of the reference energy spectrum segment, and merging the reference energy spectrum segment and the energy spectrum segment to-be-combined to obtain at least one recombined energy spectrum segment.

5. The method according to claim 3, wherein the determining (S340) a reference energy spectrum segment according to the reserved energy spectrum segment, and determining (S340) at least one recombined energy spectrum segment according to the reference energy spectrum segment and at least one energy spectrum partition located at to two ends of the reference energy spectrum segment, comprising:
determining the reserved energy spectrum segment as the reference energy spectrum segment, and determining an energy spectrum segment to be removed according to a fifth preset number of energy spectrum partitions located at at least one of the two ends of the reference energy spectrum segment, and removing the energy spectrum segment to be removed in the reference energy spectrum segment to obtain at least one recombined energy spectrum segment.

6. The method according to claim 3, the method further comprising:
if a difference between a number of channels of energy spectrum partitions respectively in each recombined energy spectrum segment and a number of channels of energy spectrum partitions respectively in the reference energy spectrum segment does not exceed a preset difference threshold, using the marked energy spectrum segment as the target counting window of the energy spectrum to be processed.

7. The method according to claim 1, wherein the updating (S240) the marked energy spectrum segment according to the plurality of energy spectrum partitions corresponding to the reserved energy spectrum segment comprises:

traversing combinations of the plurality of energy spectrum partitions in the reserved energy spectrum segment to obtain at least one combined energy spectrum segment, wherein each combined energy spectrum segment is obtained by combining two or more contiguously arranged energy spectrum partitions; and

updating the marked energy spectrum segment according to window locating indexes of the plurality of energy spectrum partitions in the reserved energy spectrum segment and window locating indexes of the at least one combined energy spectrum segment.

8. The method according to claim 1, wherein the partitioning (S240) the reserved energy spectrum segment to obtain a plurality of energy spectrum partitions corresponding to the reserved energy spectrum segment comprises:

partitioning the reserved energy spectrum segment into at least two energy spectrum partitions according to a total number of channels and a preset number of channels comprised in an energy spectrum partition; or partitioning the reserved energy spectrum segment into at least two energy spectrum partitions according to a total number of channels and a preset number of partitions corresponding to energy spectrum partitions; or partitioning the reserved energy spectrum segment into at least two energy spectrum partitions according to a distribution of energy spectrum data of the reserved energy spectrum segment; or partitioning the reserved energy spectrum segment into at least two energy spectrum partitions based on a preset random algorithm; or determining an energy spectrum segment to be repartitioned according to a number of the plurality of energy spectrum partitions in the reserved energy spectrum segment and arrangement information of at least one channel segment corresponding to the plurality of energy spectrum partitions, and partitioning the energy spectrum segment to be repartitioned, to obtain a plurality of energy spectrum partitions corresponding to the reserved energy spectrum segment according to a repartitioned result of the energy spectrum segment to be repartitioned.

9. The method according to claim 8, wherein the determining an energy spectrum segment to be repartitioned according to a number of the plurality of energy spectrum partitions in the reserved energy spectrum segment and arrangement information of at least one channel segment corresponding to the plurality of energy spectrum partitions, comprising:

determining a whole reserved energy spectrum segment as an energy spectrum segment to be repartitioned if a total number of energy spectrum partitions contained in the reserved energy spectrum segment does not reach a first preset number threshold; and determining an energy spectrum segment composed of a sixth preset number of energy spectrum partitions located at at least one of the two ends of the reserved energy spectrum segment as an energy spectrum segment to be repartitioned if the total number of energy spectrum partitions contained in the reserved energy spectrum segment reaches a second preset number threshold.

10. The method according to claim 1, wherein the preset ending partitioning condition comprises: a number of at least one channel comprised in at least one energy spectrum partition in the reserved energy spectrum segment except for the marked energy spectrum segment reaches a first preset channel number threshold; or a number of update times of the marked energy spectrum segment reaches a preset number of times threshold; or if the marked energy spectrum segment is updated consecutively for a preset number of times, a change of a window locating index of the marked energy spectrum segment after each update does not exceed a preset change amount; or a window locating index of the marked energy spectrum segment is better than a preset window locating index threshold.

11. The method according to claim 1, wherein the determining (S120) a window locating index of each candidate energy spectrum segment comprises:

determining a window locating index of each candidate energy spectrum segment according to energy spectrum data of the respective candidate energy spectrum segment; or, determining a window locating index of each candidate energy spectrum segment according to energy spectrum data of the respective candidate energy spectrum segment and energy spectrum data of the energy spectrum to be processed; or, determining a window locating index of each candidate energy spectrum segment according to energy spectrum data of the respective candidate energy spectrum segment and measurement sample data corresponding to the energy spectrum to be processed; or determining a window locating index of each candidate energy spectrum segment according to energy spectrum data of the respective candidate energy spectrum segment and measurement environment data corresponding to the energy spectrum to be processed; or determining a window locating index of each candidate energy spectrum segment according to energy spectrum data of the respective candidate energy spectrum segment, measurement sample data corresponding to the energy spectrum to be processed and measurement environment data corresponding to the energy spectrum to be processed.

12. The method according to claim 11, wherein the energy spectrum data comprises at least one of a sample count, a background count, measurement time, a channel and energy; the measurement sample data comprises at least one of a measurement sample activity, a measurement sample volume and a measurement sample mass; and the measurement environmental data comprises at least one of a temperature, a humidity, a particle count, dust, and electromagnetic measurement in the measurement environment.

13. An apparatus for locating an energy spectrum counting window, comprising:

an energy spectrum partitioning module (710), configured to acquire an energy spectrum to be processed, and partition the energy spectrum to be processed into at least two energy spectrum partitions according to channels, and determine at least one candidate energy spectrum segment according to the at least two energy spectrum partitions, wherein each of the at least two energy spectrum partitions comprises at least one channel among the channels, and each candidate energy spectrum segment comprises one energy spectrum partition or at least two adjacent energy spectrum partitions;
an energy spectrum segment marking module (720), configured to determine a window locating index of each candidate energy spectrum segment, and determine a marked energy spectrum segment from the at least one candidate energy spectrum segment according to the window locating index of each candidate energy spectrum segment, wherein the marked energy spectrum segment comprises one candidate energy spectrum segment in the at least one candidate energy spectrum segment, or multiple contiguous candidate energy spectrum segments in the at least one candidate energy spectrum segment; and
a counting window determining module (730), configured to determine a target counting window of the energy spectrum to be processed according to the marked energy spectrum segment;
wherein the counting window determining module (730) is further configured to:

determine a reserved energy spectrum segment according to the marked energy spectrum segment, wherein the marked energy spectrum segment is determined as the reserved energy spectrum segment, or the marked energy spectrum segment and a certain number of energy spectrum partitions adjacent to at least one of a left and right ends of the marked energy spectrum segment are determined as the reserved energy spectrum segment, or the marked energy spectrum segment and a certain number of channels adjacent to at least one of a left and right ends of the marked energy spectrum segment are determined as the reserved energy spectrum segment;
partition the reserved energy spectrum segment to obtain a plurality of energy spectrum partitions corresponding to the reserved energy spectrum segment, and update the marked energy spectrum segment according to the plurality of energy spectrum partitions corresponding to the reserved energy spectrum segment;
if a preset ending partitioning condition is met, use the updated marked energy spectrum segment as the target counting window of the energy spectrum to be processed; and
if the preset ending partitioning condition is not met, return to perform the operation of determining the reserved energy spectrum segment according to the marked energy spectrum segment.

14. An electronic device (10), comprising:

at least one processor (11); and
a memory (12, 13) communicatively connected to the at least one processor (11);
**characterized in that** the memory (12, 13) stores a computer program which is executed by the at least one processor (11), and the computer program is executed by the at least one processor (11), to enable the at least one processor (11) to perform the method for locating an energy spectrum counting window according to any one of claims 1 to 12.

15. A computer-readable storage medium, storing a computer instruction, **characterized in that** the computer instruction is used to cause a processor to implement the method for locating an energy spectrum counting window according to any one of claims 1 to 12 when the computer instruction is executed by the processor.

**Patentansprüche**

1. Verfahren zum Lokalisieren eines Zählfensters eines Energiespektrums, durchgeführt durch eine elektronische Vorrichtung (10) und umfassend:

   Erfassen (S110) eines zu verarbeitenden Energiespektrums und Unterteilen des zu verarbeitenden Energiespektrums in mindestens zwei Energiespektrumpartitionen gemäß Kanälen, wobei jede der mindestens zwei Energiespektrumpartitionen mindestens einen Kanal unter den Kanälen umfasst, und Bestimmen (S110) mindestens eines Kandidaten-Energiespektrumsegments gemäß den mindestens zwei Energiespektrumpartitionen, wobei jedes Kandidaten-Energiespektrumsegment eine Energiespektrumpartition oder mindestens zwei benachbarte Energiespektrumpartitionen umfasst;
   Bestimmen (S120) eines Fensterlokalisierungsindex jedes Kandidaten-Energiespektrumsegments und Bestimmen eines markierten Energiespektrumsegments aus dem mindestens einen Kandidaten-Energiespektrumsegment gemäß dem Fensterlokalisierungsindex jedes Kandidaten- Energiespektrumsegments, wobei das markierte Energiespektrumsegment ein Kandidaten-Energiespektrumsegment in dem mindestens einen Kandidaten- Energiespektrumsegment oder mehrere zusammenhängende Kandidaten-Energiespektrumsegmente in dem mindestens einen Kandidaten- Energiespektrumsegment umfasst; und
   Bestimmen (S130) eines Zielzählfensters des zu verarbeitenden Energiespektrums gemäß dem markierten Energiespektrumsegment;
   wobei das Bestimmen eines Zielzählfensters des zu verarbeitenden Energiespektrums gemäß dem markierten Energiespektrumsegment umfasst:

   Bestimmen (S230) eines reservierten Energiespektrumsegments gemäß dem markierten Energiespektrumsegment, wobei das markierte Energiespektrumsegment als das reservierte Energiespektrumsegment bestimmt wird, oder das markierte Energiespektrumsegment und eine bestimmte Anzahl von Energiespektrumpartitionen, die an mindestens einem von linkem und rechtem Ende des markierten Energiespektrumsegments benachbart sind, als das reservierte Energiespektrumsegment bestimmt werden, oder das markierte Energiespektrumsegment und eine bestimmte Anzahl von Kanälen, die an mindestens einem von linkem und rechtem Ende des markierten Energiespektrumsegments benachbart sind, als das reservierte Energiespektrumsegment bestimmt werden;
   Unterteilen (S240) des reservierten Energiespektrumsegments, um mehrere Energiespektrumpartitionen entsprechend dem reservierten Energiespektrumsegment zu erhalten, und Aktualisieren (S240) des markierten Energiespektrumsegments gemäß den mehreren Energiespektrumpartitionen entsprechend dem reservierten Energiespektrumsegment;
   falls eine voreingestellte Beendigungs-Unterteilungsbedingung erfüllt ist, Verwenden (S250) des aktualisierten markierten Energiespektrumsegments als das Zielzählfenster des zu verarbeitenden Energiespektrums; und
   falls die voreingestellte Beendigungs-Unterteilungsbedingung nicht erfüllt ist, Rückkehren zur Durchführung des Vorgangs von Bestimmen (S230) des reservierten Energiespektrumsegments gemäß dem markierten Energiespektrumsegment.

2. Verfahren nach Anspruch 1, wobei das Bestimmen eines reservierten Energiespektrumsegments gemäß dem markierten Energiespektrumsegment umfasst:

   Verwenden des markierten Energiespektrumsegments als das reservierte Energiespektrumsegment; oder
   Zusammenführen einer ersten voreingestellten Anzahl von Energiespektrumpartitionen, die an mindestens einem von zwei Enden des markierten Energiespektrumsegments benachbart sind, in das markierte Energiespektrumsegment, um das reservierte Energiespektrumsegment zu erhalten; oder
   Zusammenführen einer zweiten voreingestellten Anzahl von Kanälen, die an mindestens einem der beiden Enden des markierten Energiespektrumsegments benachbart sind, in das markierte Energiespektrumsegment, um das reservierte Energiespektrumsegment zu erhalten.

3. Verfahren nach Anspruch 1, wobei das Aktualisieren (S240) des markierten Energiespektrumsegments gemäß den mehreren Energiespektrumpartitionen entsprechend dem reservierten Energiespektrumsegment umfasst:

   Bestimmen (S340) eines Referenz-Energiespektrumsegments gemäß dem reservierten Energiespektrumsegment und Bestimmen (S340) mindestens eines rekombinierten Energiespektrumsegments gemäß dem Referenz-Energiespektrumsegment und mindestens einer Energiespektrumpartition, die an zwei Enden des Referenz-Energiespektrumsegments liegt;

falls ein Fensterlokalisierungsindex eines rekombinierten Energiespektrumsegments in dem mindestens einen rekombinierten Energiespektrumsegment besser ist als ein Fensterlokalisierungsindex des Referenz-Energiespektrumsegments, Aktualisieren (S360) des Referenz-Energiespektrumsegments als ein rekombiniertes Energiespektrumsegment mit einem optimalen Fensterlokalisierungsindex und Rückkehren zur Durchführung des Vorgangs von Bestimmen mindestens eines rekombinierten Energiespektrumsegments gemäß dem Referenz-Energiespektrumsegment und der mindestens einen Energiespektrumpartition, die an den beiden Enden des Referenz-Energiespektrumsegments liegt; und

falls ein Fensterlokalisierungsindex jedes des mindestens einen rekombinierten Energiespektrumsegments nicht besser ist als der Fensterlokalisierungsindex des Referenz-Energiespektrumsegments, Verwenden (S350) des Referenz-Energiespektrumsegments als das markierte Energiespektrumsegment.

4. Verfahren nach Anspruch 3, wobei das Bestimmen (S340) eines Referenz-Energiespektrumsegments gemäß dem reservierten Energiespektrumsegment und Bestimmen (S340) mindestens eines rekombinierten Energiespektrumsegments gemäß dem Referenz-Energiespektrumsegment und mindestens einer Energiespektrumpartition, die an zwei Enden des Referenz-Energiespektrumsegments liegt, umfassen:

Bestimmen von Fensterlokalisierungsindizes mehrerer Energiespektrumpartitionen des reservierten Energiespektrumsegments und Bestimmen einer Energiespektrumpartition, deren Fensterlokalisierungsindex eine voreingestellte Referenzbedingung erfüllt, als das Referenz-Energiespektrumsegment, oder, falls eine Anzahl von Energiespektrumpartitionen in dem markierten Energiespektrumsegment größer als ein voreingestellter Partitionsanzahl-Schwellenwert ist, Entfernen einer dritten voreingestellten Anzahl von Energiespektrumpartitionen, die an mindestens einem Ende von zwei Enden des reservierten Energiespektrumsegments liegen, aus dem reservierten Energiespektrumsegment, um ein Referenz-Energiespektrumsegment zu erhalten; und

Bestimmen eines zu kombinierenden Energiespektrumsegments gemäß einer vierten voreingestellten Anzahl von Energiespektrumpartitionen, die an mindestens einem der beiden Enden des Referenz-Energiespektrumsegments benachbart sind, und Zusammenführen des Referenz-Energiespektrumsegments und des zu kombinierenden Energiespektrumsegments, um mindestens ein rekombiniertes Energiespektrumsegment zu erhalten.

5. Verfahren nach Anspruch 3, wobei das Bestimmen (S340) eines Referenz-Energiespektrumsegments gemäß dem reservierten Energiespektrumsegment und Bestimmen (S340) mindestens eines rekombinierten Energiespektrumsegments gemäß dem Referenz-Energiespektrumsegment und mindestens einer Energiespektrumpartition, die an zwei Enden des Referenz-Energiespektrumsegments liegt, umfassen:

Bestimmen des reservierten Energiespektrumsegments als das Referenz-Energiespektrumsegment und Bestimmen eines zu entfernenden Energiespektrumsegments gemäß einer fünften voreingestellten Anzahl von Energiespektrumpartitionen, die an mindestens einem der beiden Enden des Referenz-Energiespektrumsegments liegen, und Entfernen des zu entfernenden Energiespektrumsegments in dem Referenz-Energiespektrumsegment, um mindestens ein rekombiniertes Energiespektrumsegment zu erhalten.

6. Verfahren nach Anspruch 3, ferner umfassend:

falls eine Differenz zwischen einer Anzahl von Kanälen der Energiespektrumpartitionen in jedem rekombinierten Energiespektrumsegment und einer Anzahl von Kanälen der Energiespektrumpartitionen in dem Referenz-Energiespektrumsegment einen voreingestellten Differenz-Schwellenwert nicht überschreitet, Verwenden des markierten Energiespektrumsegments als das Zielzählfenster des zu verarbeitenden Energiespektrums.

7. Verfahren nach Anspruch 1, wobei das Aktualisieren (S240) des markierten Energiespektrumsegments gemäß den mehreren Energiespektrumpartitionen entsprechend dem reservierten Energiespektrumsegment umfasst:

Durchlaufen von Kombinationen der mehreren Energiespektrumpartitionen in dem reservierten Energiespektrumsegment, um mindestens ein kombiniertes Energiespektrumsegment zu erhalten, wobei jedes kombinierte Energiespektrumsegment durch Kombinieren von zwei oder mehr kontinuierlich angeordneten Energiespektrumpartitionen erhalten wird; und

Aktualisieren des markierten Energiespektrumsegments gemäß Fensterlokalisierungsindizes der mehreren Energiespektrumpartitionen in dem reservierten Energiespektrumsegment und Fensterlokalisierungsindizes des mindestens einen kombinierten Energiespektrumsegments.

8. Verfahren nach Anspruch 1, wobei das Unterteilen (S240) des reservierten Energiespektrumsegments, um mehrere Energiespektrumpartitionen entsprechend dem reservierten Energiespektrumsegment zu erhalten, umfasst:

Unterteilen des reservierten Energiespektrumsegments in mindestens zwei Energiespektrumpartitionen gemäß einer Gesamtanzahl von Kanälen und einer voreingestellten Anzahl von Kanälen, die in einer Energiespektrumpartition enthalten sind; oder

Unterteilen des reservierten Energiespektrumsegments in mindestens zwei Energiespektrumpartitionen gemäß einer Gesamtanzahl von Kanälen und einer voreingestellten Anzahl von Partitionen entsprechend Energiespektrumpartitionen; oder

Unterteilen des reservierten Energiespektrumsegments in mindestens zwei Energiespektrumpartitionen gemäß einer Verteilung von Energiespektrumdaten des reservierten Energiespektrumsegments; oder

Unterteilen des reservierten Energiespektrumsegments in mindestens zwei Energiespektrumpartitionen basierend auf einem voreingestellten Zufallsalgorithmus; oder

Bestimmen eines neu zu unterteilenden Energiespektrumsegments gemäß einer Anzahl der mehreren Energiespektrumpartitionen in dem reservierten Energiespektrumsegment und Anordnungsinformationen von mindestens einem Kanalsegment entsprechend den mehreren Energiespektrumpartitionen, und Unterteilen des neu zu unterteilenden Energiespektrumsegments, um mehrere Energiespektrumpartitionen entsprechend dem reservierten Energiespektrumsegment gemäß einem Neuunterteilungsergebnis des neu zu unterteilenden Energiespektrumsegments zu erhalten.

9. Verfahren nach Anspruch 8, wobei das Bestimmen eines neu zu unterteilenden Energiespektrumsegments gemäß einer Anzahl der mehreren Energiespektrumpartitionen in dem reservierten Energiespektrumsegment und Anordnungsinformationen von mindestens einem Kanalsegment entsprechend den mehreren Energiespektrumpartitionen umfasst:

Bestimmen des gesamten reservierten Energiespektrumsegments als ein neu zu unterteilendes Energiespektrumsegment, falls eine Gesamtanzahl von in dem reservierten Energiespektrumsegment enthaltenen Energiespektrumpartitionen einen ersten voreingestellten Anzahl-Schwellenwert nicht erreicht; und

Bestimmen eines Energiespektrumsegments, das aus einer sechsten voreingestellten Anzahl von Energiespektrumpartitionen besteht, die an mindestens einem der beiden Enden des reservierten Energiespektrumsegments liegen, als ein neu zu unterteilendes Energiespektrumsegment, falls die Gesamtanzahl von in dem reservierten Energiespektrumsegment enthaltenen Energiespektrumpartitionen einen zweiten voreingestellten Anzahl-Schwellenwert erreicht.

10. Verfahren nach Anspruch 1, wobei die voreingestellte Beendigungs-Unterteilungsbedingung umfasst: eine Anzahl von mindestens einem Kanal, der in mindestens einer Energiespektrumpartition in dem reservierten Energiespektrumsegment außer dem markierten Energiespektrumsegment enthalten ist, einen ersten voreingestellten Kanalanzahl-Schwellenwert erreicht; oder eine Anzahl von Aktualisierungszeiten des markierten Energiespektrumsegments einen voreingestellten Häufigkeitsschwellenwert erreicht; oder falls das markierte Energiespektrumsegment für eine voreingestellte Häufigkeit aufeinanderfolgend aktualisiert wird, eine Änderung eines Fensterlokalisierungsindex des markierten Energiespektrumsegments nach jeder Aktualisierung einen voreingestellten Änderungsbetrag nicht überschreitet; oder ein Fensterlokalisierungsindex des markierten Energiespektrumsegments besser als ein voreingestellter Fensterlokalisierungsindex-Schwellenwert ist.

11. Verfahren nach Anspruch 1, wobei das Bestimmen (S120) eines Fensterlokalisierungsindex für jedes Kandidaten-Energiespektrumsegment umfasst:

Bestimmen eines Fensterlokalisierungsindex jedes Kandidaten-Energiespektrumsegments gemäß Energiespektrum-Daten des jeweiligen Kandidaten-Energiespektrumsegments; oder

Bestimmen eines Fensterlokalisierungsindex jedes Kandidaten-Energiespektrumsegments gemäß Energiespektrum-Daten des jeweiligen Kandidaten-Energiespektrumsegments und Energiespektrum-Daten des zu verarbeitenden Energiespektrums; oder

Bestimmen eines Fensterlokalisierungsindex jedes Kandidaten-Energiespektrumsegments gemäß Energiespektrum-Daten des jeweiligen Kandidaten-Energiespektrumsegments und Messprobendaten entsprechend dem zu verarbeitenden Energiespektrum; oder

Bestimmen eines Fensterlokalisierungsindex jedes Kandidaten-Energiespektrumsegments gemäß Energiespektrum-Daten des jeweiligen Kandidaten-Energiespektrumsegments und Messumgebungsdaten entsprechend dem zu verarbeitenden Energiespektrum; oder

Bestimmen eines Fensterlokalisierungsindex jedes Kandidaten-Energiespektrumsegments gemäß Energiespektrum-Daten des jeweiligen Kandidaten-Energiespektrumsegments, Messprobendaten entsprechend dem zu verarbeitenden Energiespektrum und Messumgebungsdaten entsprechend dem zu verarbeitenden Energiespektrum.

12. Verfahren nach Anspruch 11, wobei die Energiespektrum-Daten mindestens eines umfassen aus: einer Probenzahl, einer Hintergrundzahl, Messzeit, einem Kanal und Energie; die Messprobendaten mindestens eines umfassen aus: einer Messprobenaktivität, einem Messprobenvolumen und einer Messprobenmasse; und die Messumgebungsdaten mindestens eines umfassen aus: einer Temperatur, einer Luftfeuchtigkeit, einer Partikelzahl, Staub und elektromagnetischer Messung in der Messumgebung.

13. Vorrichtung zum Lokalisieren eines Energiespektrum-Zählfensters, umfassend:

ein Energiespektrum-Unterteilungsmodul (710), konfiguriert zum Erfassen eines zu verarbeitenden Energiespektrums und Unterteilen des zu verarbeitenden Energiespektrums in mindestens zwei Energiespektrumpartitionen gemäß Kanälen und Bestimmen mindestens eines Kandidaten-Energiespektrumsegments gemäß den mindestens zwei Energiespektrumpartitionen, wobei jede der mindestens zwei Energiespektrumpartitionen mindestens einen Kanal unter den Kanälen umfasst und jedes Kandidaten-Energiespektrumsegment eine Energiespektrum-Partition oder mindestens zwei benachbarte Energiespektrumpartitionen umfasst;
ein Energiespektrumsegment-Markierungsmodul (720), konfiguriert zum Bestimmen eines Fensterlokalisierungsindex jedes Kandidaten-Energiespektrumsegments und Bestimmen eines markierten Energiespektrumsegments aus dem mindestens einen Kandidaten-Energiespektrumsegment gemäß dem Fensterlokalisierungsindex jedes Kandidaten-Energiespektrumsegments, wobei das markierte Energiespektrumsegment ein Kandidaten-Energiespektrumsegment in dem mindestens einen Kandidaten-Energiespektrumsegment oder mehrere zusammenhängende Kandidaten-Energiespektrumsegmente in dem mindestens einen Kandidaten-Energiespektrumsegment umfasst; und
ein Zählfenster-Bestimmungsmodul (730), konfiguriert zum Bestimmen eines Zielzählfensters des zu verarbeitenden Energiespektrums gemäß dem markierten Energiespektrumsegment;
wobei das Zählfenster-Bestimmungsmodul (730) ferner konfiguriert ist zum:

Bestimmen eines reservierten Energiespektrumsegments gemäß dem markierten Energiespektrumsegment, wobei das markierte Energiespektrumsegment als das reservierte Energiespektrumsegment bestimmt wird, oder das markierte Energiespektrumsegment und eine bestimmte Anzahl von Energiespektrumpartitionen, die an mindestens einem von linkem und rechtem Ende des markierten Energiespektrumsegments benachbart sind, als das reservierte Energiespektrumsegment bestimmt werden, oder das markierte Energiespektrumsegment und eine bestimmte Anzahl von Kanälen, die an mindestens einem von linkem und rechtem Ende des markierten Energiespektrumsegments benachbart sind, als das reservierte Energiespektrumsegment bestimmt werden;
Unterteilen des reservierten Energiespektrumsegments, um mehrere Energiespektrumpartitionen entsprechend dem reservierten Energiespektrumsegment zu erhalten, und Aktualisieren des markierten Energiespektrumsegments gemäß den mehreren Energiespektrumpartitionen entsprechend dem reservierten Energiespektrumsegment;
falls eine voreingestellte Beendigungs-Unterteilungsbedingung erfüllt ist, Verwenden des aktualisierten markierten Energiespektrumsegments als das Zielzählfenster des zu verarbeitenden Energiespektrums; und
falls die voreingestellte Beendigungs-Unterteilungsbedingung nicht erfüllt ist, Rückkehren zur Durchführung des Vorgangs von Bestimmen des reservierten Energiespektrumsegments gemäß dem markierten Energiespektrumsegment.

14. Elektronische Vorrichtung (10), umfassend:

mindestens einen Prozessor (11); und
einen Speicher (12, 13), der kommunikativ mit dem mindestens einen Prozessor (11) verbunden ist;
**dadurch gekennzeichnet, dass** der Speicher (12, 13) ein Computerprogramm speichert, das durch den mindestens einen Prozessor (11) ausgeführt wird, und das Computerprogramm durch den mindestens einen Prozessor (11) ausgeführt wird, um den mindestens einen Prozessor (11) zu befähigen, das Verfahren zum Lokalisieren eines Energiespektrum-Zählfensters nach einem der Ansprüche 1 bis 12 durchzuführen.

15. Computerlesbares Speichermedium, das eine Computeranweisung speichert, **dadurch gekennzeichnet, dass** die Computeranweisung verwendet wird, um einen Prozessor zu veranlassen, das Verfahren zum Lokalisieren eines Energiespektrum-Zählfensters nach einem der Ansprüche 1 bis 12 zu implementieren, wenn die Computeranweisung durch den Prozessor ausgeführt wird.

**Revendications**

1. Procédé de localisation d'une fenêtre de comptage de spectres énergétiques, exécuté par un dispositif électronique (10) et comprenant :

   acquérir +(S110) un spectre énergétique à traiter, et partitionner le spectre énergétique à traiter en au moins deux partitions de spectre énergétique en fonction de canaux, chacun des deux partitions de spectre énergétique comprenant au moins un canal parmi les canaux, et déterminer (S110) au moins un segment de spectre énergétique candidat en fonction des au moins deux partitions de spectre énergétique, chaque segment de spectre énergétique candidat comprenant une partition de spectre énergétique ou au moins deux partitions de spectre énergétique adjacentes ;
   déterminer (S120) un indice de localisation de fenêtre pour chaque segment de spectre énergétique candidat, et déterminer un segment de spectre énergétique marqué à partir de l'au moins un segment de spectre énergétique candidat en fonction de l'indice de localisation de fenêtre de chaque segment de spectre énergétique candidat, le segment de spectre énergétique marqué comprenant un segment de spectre énergétique candidat de l'au moins un segment de spectre énergétique candidat, ou plusieurs segments de spectre énergétique candidats contigus de l'au moins un segment de spectre énergétique candidat ; et
   déterminer (S130) une fenêtre de comptage cible du spectre énergétique à traiter en fonction du segment de spectre énergétique marqué ;
   dans lequel la détermination d'une fenêtre de comptage cible du spectre énergétique à traiter en fonction du segment de spectre énergétique marqué comprend :

   déterminer (S230) un segment de spectre énergétique réservé en fonction du segment de spectre énergétique marqué, le segment de spectre énergétique marqué étant déterminé comme le segment de spectre énergétique réservé, ou le segment de spectre énergétique marqué et un certain nombre de partitions de spectre énergétique adjacentes à au moins l'une d'une extrémité gauche et d'une extrémité droite du segment de spectre énergétique marqué étant déterminés comme le segment de spectre énergétique réservé, ou le segment de spectre énergétique marqué et un certain nombre de canaux adjacents à au moins l'une d'une extrémité gauche et d'une extrémité droite du segment de spectre énergétique marqué étant déterminés comme le segment de spectre énergétique réservé ;
   partitionner (S240) le segment de spectre énergétique réservé pour obtenir une pluralité de partitions de spectre énergétique correspondant au segment de spectre énergétique réservé, et mettre à jour (S240) le segment de spectre énergétique marqué en fonction de la pluralité de partitions de spectre énergétique correspondant au segment de spectre énergétique réservé ;
   si une condition de fin de partitionnement prédéfinie est remplie, utiliser (S250) le segment de spectre énergétique marqué mis à jour comme la fenêtre de comptage cible du spectre énergétique à traiter ; et si la condition de fin de partitionnement prédéfinie n'est pas remplie, revenir pour effectuer l'opération de déterminer (S230) le segment de spectre énergétique réservé en fonction du segment de spectre énergétique marqué.

2. Procédé selon la revendication 1, dans lequel la détermination d'un segment de spectre énergétique réservé en fonction du segment de spectre énergétique marqué comprend :

   utiliser le segment de spectre énergétique marqué comme le segment de spectre énergétique réservé ; ou,
   fusionner un premier nombre prédéfini de partitions de spectre énergétique adjacentes à au moins l'une de deux extrémités du segment de spectre énergétique marqué dans le segment de spectre énergétique marqué pour obtenir le segment de spectre énergétique réservé ; ou
   fusionner un deuxième nombre prédéfini de canaux adjacents à au moins l'une des deux extrémités du segment de spectre énergétique marqué dans le segment de spectre énergétique marqué pour obtenir le segment de spectre énergétique réservé.

3. Procédé selon la revendication 1, dans lequel la mise à jour (S240) du segment de spectre énergétique marqué en fonction de la pluralité de partitions de spectre énergétique correspondant au segment de spectre énergétique réservé comprend :

déterminer (S340) un segment de spectre énergétique de référence en fonction du segment de spectre énergétique réservé, et déterminer (S340) au moins un segment de spectre énergétique recombiné en fonction du segment de spectre énergétique de référence et au moins une partition de spectre énergétique localisée à deux extrémités du segment de spectre énergétique de référence ;

si un indice de localisation de fenêtre d'un segment de spectre énergétique recombiné de l'au moins un segment de spectre énergétique recombiné est meilleur qu'un indice de localisation de fenêtre du segment de spectre énergétique de référence, mettre à jour (S360) le segment de spectre énergétique de référence comme un segment de spectre énergétique recombiné avec un indice de localisation de fenêtre optimal, et revenir pour effecteur l'opération de déterminer au moins un segment de spectre énergétique recombiné en fonction du segment de spectre énergétique de référence et l'au moins une partition de spectre énergétique localisée aux deux extrémités du segment de spectre énergétique de référence ; et

si un indice de localisation de fenêtre de chacun de l'au moins un segment de spectre énergétique recombiné n'est pas meilleur que l'indice de localisation de fenêtre du segment de spectre énergétique de référence, utiliser (S350) le segment de spectre énergétique de référence comme le segment de spectre énergétique marqué.

4. Procédé selon la revendication 3, dans lequel la détermination (S340) d'un segment de spectre énergétique de référence en fonction du segment de spectre énergétique réservé, et la détermination (S340) d'au moins un segment de spectre énergétique recombiné en fonction du segment de spectre énergétique de référence et d'au moins une partition de spectre énergétique localisée à deux extrémités du segment de spectre énergétique de référence, comprennent :

déterminer des indices de localisation de fenêtre d'une pluralité de partitions de spectre énergétique du segment de spectre énergétique réservé, et déterminer une partition de spectre énergétique avec l'indice de localisation de fenêtre remplissant une condition de référence prédéfinie comme le segment de spectre énergétique de référence, ou, si un nombre de partitions de spectre énergétique dans le segment de spectre marqué est supérieur à un seuil prédéfini de nombre de partitions, supprimer un troisième nombre prédéfini de partitions de spectre énergétique localisées à au moins une extrémité de deux extrémités du segment de spectre énergétique réservé du segment de spectre énergétique réservé pour obtenir un segment de spectre énergétique de référence ; et

déterminer un segment de spectre énergétique à combiner en fonction d'un quatrième nombre prédéfini de partitions de spectre énergétique adjacentes à au moins l'une des deux extrémités du segment de spectre énergétique de référence, puis fusionner le segment de spectre énergétique de référence et le segment de spectre énergétique à combiner pour obtenir au moins un segment de spectre énergétique recombiné.

5. Procédé selon la revendication 3, dans lequel la détermination (S340) d'un segment de spectre énergétique de référence en fonction du segment de spectre énergétique réservé, et la détermination (S340) d'au moins un segment de spectre énergétique recombiné en fonction du segment de spectre énergétique de référence et d'au moins une partition de spectre énergétique localisée à deux extrémités du segment de spectre énergétique de référence, comprend :
déterminer le segment de spectre énergétique réservé comme le segment de spectre énergétique de référence, et déterminer un segment de spectre énergétique à supprimer en fonction d'un cinquième nombre prédéfini de partitions de spectre énergétique localisées à au moins l'une des deux extrémités du segment de spectre énergétique de référence, et supprimer le segment de spectre énergétique à supprimer du segment de spectre énergétique de référence pour obtenir au moins un segment de spectre énergétique recombiné.

6. Procédé selon la revendication 3, comprenant en outre :
si une différence entre un nombre de canaux de partitions de spectre énergétique respectivement dans chaque segment de spectre énergétique recombiné et un nombre de canaux de partitions de spectre énergétique respectivement dans le segment de spectre énergétique de référence ne dépasse pas un seuil de différence prédéfini, utiliser le segment de spectre énergétique marqué comme la fenêtre de comptage cible du spectre énergétique à traiter.

7. Procédé selon la revendication 1, dans lequel la mise à jour (S240) du segment de spectre énergétique marqué en fonction de la pluralité de partitions de spectre énergétique correspondant au segment de spectre énergétique réservé comprend :

parcourir des combinaisons de la pluralité de partitions de spectre énergétique dans le segment de spectre énergétique réservé pour obtenir au moins un segment de spectre énergétique combiné, chaque segment de spectre énergétique combiné étant obtenu en combinant deux partitions de spectre énergétique ou plus disposées de manière contiguë ; et

mettre à jour le segment de spectre énergétique marqué en fonction des index de localisation de fenêtre de la pluralité de partitions de spectre énergétique dans le segment de spectre énergétique réservé et des index de localisation de fenêtre de l'au moins un segment de spectre énergétique combiné.

8. Procédé selon la revendication 1, dans lequel le partitionnement (S240) du segment de spectre énergétique réservé pour obtenir une pluralité de partitions de spectre énergétique correspondant au segment de spectre énergétique réservé comprend :

partitionner le segment de spectre énergétique réservé en au moins deux partitions de spectre énergétique en fonction d'un nombre total de canaux et d'un nombre prédéfini de canaux contenus dans une partition de spectre énergétique ; ou

partitionner le segment de spectre énergétique réservé en au moins deux partitions de spectre énergétique en fonction d'un nombre total de canaux et d'un nombre prédéfini de partitions correspondant à partitions de spectre énergétique ; ou

partitionner le segment de spectre énergétique réservé en au moins deux partitions de spectre énergétique en fonction d'une distribution de données de spectre énergétique du segment de spectre énergétique réservé ; ou

partitionner le segment de spectre énergétique réservé en au moins deux partitions de spectre énergétique sur la base d'un algorithme aléatoire prédéfini ; ou

déterminer un segment de spectre énergétique à re-partitionner en fonction d'un nombre de la pluralité de partitions de spectre énergétique dans le segment de spectre énergétique réservé et des informations d'agencement d'au moins un segment de canal correspondant à la pluralité de partitions de spectre énergétique, puis partitionner le segment de spectre énergétique à re-partitionner pour obtenir une pluralité de partitions de spectre énergétique correspondant au segment de spectre énergétique réservé en fonction d'un résultat de re-partitionnement du segment de spectre énergétique à re-partitionner.

9. Procédé selon la revendication 8, dans lequel la détermination d'un segment de spectre énergétique à re-partitionner en fonction d'un nombre de la pluralité de partitions de spectre énergétique dans le segment de spectre énergétique réservé et des informations d'agencement d'au moins un segment de canal correspondant à la pluralité de partitions de spectre énergétique, comprend :

déterminer un segment entier de spectre énergétique réservé comme un segment de spectre énergétique à re-partitionner si un nombre total de partitions de spectre énergétique contenues dans le segment de spectre énergétique réservé n'atteint pas un premier seuil de nombre prédéfini ; et

déterminer un segment de spectre énergétique composé d'un sixième nombre prédéfini de partitions de spectre énergétique localisées à au moins une des deux extrémités du segment de spectre énergétique réservé comme un segment de spectre énergétique à re-partitionner si le nombre total de partitions de spectre énergétique contenues dans le segment de spectre énergétique réservé atteint un deuxième seuil de nombre prédéfini.

10. Procédé selon la revendication 1, dans lequel la condition de fin de partitionnement prédéfinie comprend : un nombre d'au moins un canal contenu dans au moins une partition de spectre énergétique dans le segment de spectre énergétique réservé, à l'exception du segment de spectre énergétique marqué, atteint un premier seuil prédéfini de nombre de canaux ; ou un nombre de fois de mises à jour du segment de spectre énergétique marqué atteint un nombre de fois prédéfini ; ou si le segment de spectre énergétique marqué est mis à jour consécutivement pendant un nombre de fois prédéfini, un changement d'un indice de localisation de fenêtre du segment de spectre énergétique marqué après chaque mise à jour ne dépasse pas une valeur de changement prédéfinie ; ou un indice de localisation de fenêtre du segment de spectre énergétique marqué est meilleur qu'un seuil prédéfini d'indice de localisation de fenêtre.

11. Procédé selon la revendication 1, dans lequel la détermination (S120) d'un indice localisation de fenêtre pour chaque segment de spectre énergétique candidat comprend :

déterminer un indice de localisation de fenêtre pour chaque segment de spectre énergétique candidat en fonction des données de spectre énergétique du segment de spectre énergétique candidat respectif ; ou,

déterminer un indice de localisation de fenêtre pour chaque segment de spectre énergétique candidat en fonction des données de spectre énergétique du segment de spectre énergétique candidat respectif et des données de spectre énergétique du spectre énergétique à traiter ; ou,
déterminer un indice de localisation de fenêtre pour chaque segment de spectre énergétique candidat en fonction des données de spectre énergétique du segment de spectre énergétique candidat respectif et des données d'échantillon de mesure correspondant au spectre énergétique à traiter ; ou
déterminer un indice de localisation de fenêtre pour chaque segment de spectre énergétique candidat en fonction des données de spectre énergétique du segment de spectre énergétique candidat respectif et des données d'environnement de mesure correspondant au spectre énergétique à traiter ; ou
déterminer un indice de localisation de fenêtre pour chaque segment de spectre énergétique candidat en fonction des données de spectre énergétique du segment de spectre énergétique candidat respectif, des données d'échantillon de mesure correspondant au spectre énergétique à traiter et des données d'environnement de mesure correspondant au spectre énergétique à traiter.

12. Procédé selon la revendication 11, dans lequel les données de spectre énergétique comprennent au moins un parmi un compte d'échantillons, un compte de fonds, un temps de mesure, un canal et énergie ; les données d'échantillon de mesure comprennent au moins un parmi une activité d'échantillon de mesure, un volume d'échantillon de mesure et une masse d'échantillon de mesure ; et les données d'environnement de mesure comprennent au moins un parmi une température, une humidité, un compte de particules, de poussières et de mesures électromagnétiques dans l'environnement de mesure.

13. Appareil de localisation d'une fenêtre de comptage de spectres énergétiques, comprenant :

un module de partitionnement de spectres énergétiques (710), configuré pour acquérir un spectre énergétique à traiter, et pour partitionner le spectre énergétique à traiter en au moins deux partitions de spectre énergétique en fonction de canaux, et déterminer au moins un segment de spectre énergétique candidat en fonction des au moins deux partitions de spectre énergétique, chacun des deux partitions de spectre énergétique comprenant au moins un canal parmi les canaux et chaque segment de spectre énergétique candidat comprenant une partition de spectre énergétique ou au moins deux partitions de spectre énergétique adjacentes ;
un module de marquage de segments de spectre énergétique (720), configuré pour déterminer un indice de localisation de fenêtre pour chaque segment de spectre énergétique candidat, et déterminer un segment de spectre énergétique marqué à partir de l'au moins un segment de spectre énergétique candidat en fonction de l'indice de localisation de fenêtre de chaque segment de spectre énergétique candidat, le segment de spectre énergétique marqué comprenant un segment de spectre énergétique candidat de l'au moins un segment de spectre énergétique candidat, ou plusieurs segments de spectre énergétique candidats contigus de l'au moins un segment de spectre énergétique candidat ; et
un module de détermination de fenêtre de comptage (730), configuré pour déterminer une fenêtre de comptage cible du spectre énergétique à traiter en fonction du segment de spectre énergétique marqué ;
dans lequel le module de détermination de fenêtre de comptage (730) est configuré en outre pour :

déterminer un segment de spectre énergétique réservé en fonction du segment de spectre énergétique marqué, le segment de spectre énergétique marqué étant déterminé comme le segment de spectre énergétique réservé, ou le segment de spectre énergétique marqué et un certain nombre de partitions de spectre énergétique adjacentes à au moins l'une d'une extrémité gauche et d'une extrémité droite du segment de spectre énergétique marqué étant déterminés comme le segment de spectre énergétique réservé, ou le segment de spectre énergétique marqué et un certain nombre de canaux adjacents à au moins l'une d'une extrémité gauche et d'une extrémité droite du segment de spectre énergétique marqué étant déterminés comme le segment de spectre énergétique réservé ;
partitionner le segment de spectre énergétique réservé pour obtenir une pluralité de partitions de spectre énergétique correspondant au segment de spectre énergétique réservé, et mettre à jour le segment de spectre énergétique marqué en fonction de la pluralité de partitions de spectre énergétique correspondant au segment de spectre énergétique réservé ;
si une condition de fin de partitionnement prédéfinie est remplie, utiliser le segment de spectre énergétique marqué mis à jour comme la fenêtre de comptage cible du spectre énergétique à traiter ; et
si la condition de fin de partitionnement prédéfinie n'est pas remplie, revenir pour effectuer l'opération de déterminer le segment de spectre énergétique réservé en fonction du segment de spectre énergétique marqué.

14. Dispositif électronique (10), comprenant :

au moins un processeur (11) ; et
une mémoire (12, 13) connectée par communication à l'au moins un processeur (11) ;
**caractérisé en ce que** la mémoire (12, 13) stocke un programme informatique exécutable par l'au moins un processeur (11), et le programme informatique est exécuté par l'au moins un processeur (11), pour permettre à l'au moins un processeur (11) de mettre en œuvre le procédé de localisation d'une fenêtre de comptage de spectres énergétiques selon l'une quelconque des revendications 1 à 12.

15. Support de stockage lisible par ordinateur stockant une instruction informatique, **caractérisé en ce que** l'instruction informatique est utilisée pour amener un processeur à mettre en œuvre le procédé de localisation d'une fenêtre de comptage de spectres énergétiques selon l'une quelconque des revendications 1 à 12 lorsque l'instruction informatique est exécutée par le processeur.

Acquire an energy spectrum to be processed, and partition the energy spectrum to be processed into at least two energy spectrum partitions according to channels, and determine at least one candidate energy spectrum segment according to the at least two energy spectrum partitions

S110

Determine a window locating index of each candidate energy spectrum segment, and determine a marked energy spectrum segment from the at least one candidate energy spectrum segment according to the window locating index of each candidate energy spectrum segment

S120

Determine a target counting window of the energy spectrum to be processed according to the marked energy spectrum segment

S130

**FIG. 1**

Acquire an energy spectrum to be processed, and partition the energy spectrum to be processed into at least two energy spectrum partitions according to channels, determine at least one candidate energy spectrum segment according to the at least two energy spectrum partitions    S210

Determine a window locating index of each candidate energy spectrum segment, and determine a marked energy spectrum segment from the at least one candidate energy spectrum segment according to the window locating index of each candidate energy spectrum segment    S220

Determine a reserved energy spectrum segment according to the marked energy spectrum segment    S230

Partition the reserved energy spectrum segment to obtain multiple energy spectrum partitions corresponding to the reserved energy spectrum segment, and update the marked energy spectrum segment according to the multiple energy spectrum partitions corresponding to the reserved energy spectrum segment    S240

A preset ending partitioning condition is not met

The preset ending partitioning condition is met

Determine the updated marked energy spectrum segment as a target counting window of the energy spectrum to be processed    S250

**FIG. 2**

Acquire an energy spectrum to be processed, and partition the energy spectrum to be processed into at least two energy spectrum partitions according to channels, determine at least one candidate energy spectrum segment according to the at least two energy spectrum partitions ~S310

↓

Determine a window locating index of each candidate energy spectrum segment, and determine a marked energy spectrum segment from the at least one candidate energy spectrum segment according to the window locating index of each candidate energy spectrum segment ~S320

↓

Determine a reserved energy spectrum segment according to the marked energy spectrum segment ~S330

↓

Determine a reference energy spectrum segment according to the reserved energy spectrum segment, and determine at least one recombined energy spectrum segment according to the reference energy spectrum segment and energy spectrum partitions located at or adjacent to two ends of the reference energy spectrum segment ~S340

The window locating index of at least one recombined energy spectrum segment in all recombined energy spectrum segments is better than the window locating index of the reference energy spectrum segment S360~

The window locating index of each of the recombined energy spectrum segments is not better than the window locating index of the reference energy spectrum segment

Update the reference energy spectrum segment as a recombined energy spectrum segment with the optimal window locating index

Determine the reference energy spectrum segment as a marked energy spectrum segment ~S350

A preset ending partitioning condition is not met

The preset ending partitioning condition is met

↓

Determine the updated marked energy spectrum segment as a target counting window of the energy spectrum to be processed ~S370

**FIG. 3**

**FIG. 4**

**FIG. 5**

FIG. 6

FIG. 7

Partition of the 4th iteration

FIG. 8

Partition of the 5th iteration

FIG. 9

**FIG. 10**

**FIG. 11**

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Optimal window setting in a spectrometer for low-level activity counting. **TANAKA et al.** INTERNATIONAL JOURNAL OF APPLIED RADIATION AND ISOTOPS. Pergamon Press, 01 July 1965, vol. 16, 405-412